# EUROPÄISCHE PATENTSCHRIFT

(11) **EP 3 432 108 B1**
(45) Veröffentlichungstag und Bekanntmachung des Hinweises auf die Patenterteilung: **21.04.2021**
(21) Anmeldenummer: 18182865.8
(22) Anmeldetag: 11.07.2018
(51) Int. Cl.: G05D 1/02, G08G 1/00

(54) **VERFAHREN UND STEUERVORRICHTUNG FÜR EIN AUTONOMES UND/ODER TEILAUTONOMES TRANSPORTFAHRZEUG**
METHOD AND CONTROL DEVICE FOR AUTONOMOUS AND/OR PARTLY AUTONOMOUS TRANSPORT VEHICLE
PROCÉDÉ ET DISPOSITIF DE COMMANDE POUR UN VÉHICULE DE TRANSPORT AUTONOME ET / OU PARTIELLEMENT AUTONOME

(30) Priorität: 20.07.2017 DE 102017116421
(43) Veröffentlichungstag der Anmeldung: 23.01.2019
(73) Patentinhaber: StreetScooter GmbH, 52070 Aachen (DE)
(72) Erfinder: Salomon, Jörg, 53113 Bonn (DE); Regenbogen, Ruben, 52064 Aachen (DE)
(74) Vertreter: Cohausz & Florack

(56) Entgegenhaltungen:
- WO-A1-2012/105889
- WO-A1-2014/092628
- US-A1- 2003 182 183

## Beschreibung

### Gebiet

Beispielhafte Ausführungsformen der Erfindung betreffen autonome und/oder teilautonome Fahrzeuge, insbesondere ein Verfahren und eine Steuervorrichtung für ein autonomes und/oder teilautonomes Fahrzeug.

### Hintergrund

Im Stand der Technik sind autonome und/oder teilautonome Transportfahrzeuge bekannt, die beispielsweise zum Transport von Sendungen zu einer Zielposition und/oder zur Zustellungen von Sendungen an einer Zielposition eingesetzt werden. Diese Transportfahrzeuge können sich autonom und/oder teilautonom zu der Zielposition bewegen. Allerdings können sich die Transportfahrzeuge nur in engen Systemgrenzen autonom oder teilautonom bewegen. Beispielsweise bewegen sich solche als Landfahrzeug ausgebildeten Transportfahrzeuge nur mit geringen Geschwindigkeiten autonom und warten im Falle von komplexen Umgebungssituationen (z.B. an einer Kreuzung oder in einer belebten Fußgängerzone) ab, bis sich die komplexe Umgebungssituation aufgelöst hat oder ein Bediener das Transportfahrzeug aus der komplexen Umgebungssituation gesteuert hat. Für den schnellen Transport von Sendungen über weitere Strecken oder in Bereichen, in denen es häufig zu solchen komplexen Umgebungssituationen kommt, sind diese Transportfahrzeuge daher nicht geeignet WO 2012/105889 A1 zeigt ein Verfahren und eine Steuereinrichtung, wobei die Steuervorrichtung Teil eines Transportfahrzeugs ist, wobei das Verfahren umfasst:
Erhalten von Transportinformationen für einen Transportauftrag, wobei die Transportinformationen zumindest eine mit dem Transportauftrag assoziierte Zielposition repräsentieren;
Erhalten von Transportkolonneninformationen, wobei eine geplante Route der Transportkolonne und eine Transportroute zwischen der aktuellen Position des Transportfahrzeugs und der mit dem Transportauftrag assoziierten Zielposition einen gemeinsamen Routenabschnitt umfassen.

### Zusammenfassung einiger beispielhafter Ausführungsformen der Erfindung

Die vorliegende Erfindung hat sich daher unter anderem die Aufgabe gestellt, diese Probleme zu überwinden.

Die Erfindung ist definiert durch die Merkmale der unabhängigen Ansprüche.

Die Steuervorrichtung entspricht beispielsweise der unten offenbarten Steuervorrichtung für ein autonomes und/oder teilautonomes Transportfahrzeug.

Dabei können verschiedene Schritte zumindest teilweise von verschiedenen Mitteln und/oder zumindest teilweise von den gleichen Mitteln ausgeführt werden.

Die Mittel der offenbarten Vorrichtung können Hardware- und/oder Software-Komponenten umfassen. Die Mittel können beispielsweise mindestens einen Speicher mit Programmanweisungen eines Computerprogramms (z.B. des unten offenbarten Computerprogramms) und mindestens einen Prozessor ausgebildet zum Ausführen von Programmanweisungen aus dem mindestens einen Speicher umfassen. Dementsprechend soll gemäß der Erfindung auch eine Vorrichtung offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, eine Vorrichtung zu veranlassen, ein offenbartes Verfahren auszuführen und/oder zu steuern.

Zum Beispiel umfasst die offenbarte Steuervorrichtung Kommunikationsmittel. Die Kommunikationsmittel der Steuervorrichtung sind beispielsweise eingerichtet, mit einer (z.B. entfernten) Vorrichtung mittelbar (z.B. über Kommunikationsmittel des Transportfahrzeugs) und/oder unmittelbar zu kommunizieren und Informationen (z.B. die Transportinformationen und/oder die Transportkolonneninformationen) zu senden und/oder zu empfangen.

Ein Beispiel für solche Kommunikationsmittel ist eine Kommunikationsschnittstelle. Zum Beispiel umfassen die Kommunikationsmittel der offenbarten Steuervorrichtung eine Kommunikationsschnittstelle einer drahtlosen und/oder drahtgebundenen Kommunikationstechnik.

Ein Beispiel für eine drahtlose Kommunikationstechnik ist eine lokale Funktechnik wie Radio Frequency Identification (RFID) und/oder Near Field Communication (NFC) und/oder Bluetooth (z.B. Bluetooth Version 2.1 und/oder 4.0) und/oder Wireless Local Area Network (WLAN). RFID und NFC- sind beispielsweise gemäß den ISO-Standards 18000, 11784/11785 und dem ISO/IEC-Standard 14443-A und 15693 spezifiziert. Die Bluetooth-Spezifikationen sind derzeit im Internet unter www.bluetooth.org erhältlich. WLAN ist zum Beispiel in den Standards der IEEE-802.11-Familie spezifiziert. Ein weiteres Beispiel für eine drahtlose Kommunikationstechnik ist eine überörtliche Funktechnik wie beispielsweise eine Mobilfunktechnik, zum Beispiel Global System for Mobile Communications (GSM) und/oder Universal Mobile Telecommunications System (UMTS) und/oder Long Term Evolution (LTE). Die GSM-, UMTS- und LTE-Spezifikationen werden von dem 3rd Generation Partnership Project (3GPP) gepflegt und entwickelt und sind derzeit im Internet unter anderem unter www.3gpp.com erhältlich. Ferner soll unter eine drahtlosen Kommunikationstechnik beispielsweise auch eine auf der Übertragung von optischen Signalen (z.B. Infrarotsignalen wie Infrarotsignalen gemäß dem von der Infrared Data Association (IrDA) gepflegten und spezifizierten IrDA-Standard) und/oder akustischen Signalen (z.B. Ultraschallsignalen) basierende Kommunikationstechnik verstanden werden.

Alternativ oder zusätzlich sind die Kommunikationsmittel der offenbarten Steuervorrichtung beispielsweise eingerichtet, mit dem Transportfahrzeug und/oder mit Mitteln des Transportfahrzeugs zu kommunizieren. Zum Beispiel umfassen die Kommunikationsmittel der Steuervorrichtung eine Fahrzeugschnittstelle wie eine Schnittstelle eines Fahrzeug-Bus und/oder eine Fahrzeugdiagnoseschnittstelle. Über eine solche Fahrzeugschnittstelle ist die Steuervorrichtung beispielsweise mit dem Transportfahrzeug und/oder mit Mitteln des Transportfahrzeugs (z.B. mit Kommunikationsmitteln des Fahrzeugs) verbindbar und/oder verbunden. Ein Beispiel für einen Fahrzeug-Bus ist ein Controller Area Network-Bus (CAN-Bus), ein K-Leitungs-Bus, ein L-Leitungs-Bus und/oder ein IDB-1394-Bus. Ein Beispiel für eine Fahrzeugdiagnoseschnittstelle ist eine K-Leitungs-Schnittstelle, eine L-Leitungs-Schnittstelle und/oder eine On-Board-Diagnose-Schnittstelle (OBD-Schnittstelle).

Es versteht sich, dass die Erfindung nicht auf die beispielhafte genannten drahtlosen und drahtgebundene Kommunikationstechniken beschränkt ist und auch andere Kommunikationstechniken als von der Erfindung umfasst verstanden werden sollen.

Alternativ oder zusätzlich können die Mittel der Steuervorrichtung eine oder mehrere Positionserfassungsmittel (z.B. einen oder mehrere Positionssensoren), eine oder mehrere Erfassungsmittel (z.B. einen oder mehrere Sensoren) und/oder eine oder mehrere Benutzerschnittstellen (z.B. eine Tastatur, eine Maus, eine Kamera, einen Bildschirm, einen berührungsempfindlichen Bildschirm, einen Lautsprecher, ein Mikrofon, usw.) umfassen. Es versteht sich, dass die Steuervorrichtung auch andere nicht aufgeführte Mittel umfassen kann.

Die offenbarte Steuervorrichtung ist beispielsweise Teil eines autonomen und/oder teilautonomen Transportfahrzeugs.

Gemäß einem weiteren beispielhaften Aspekt der Erfindung wird ferner ein autonomes und/oder teilautonomes Transportfahrzeug offenbart, wobei das Transportfahrzeug umfasst:
- eine offenbarte Steuervorrichtung für ein autonomes und/oder teilautonomes Transportfahrzeug.

Gemäß der Erfindung wird ein System offenbart, das folgendes umfasst:
- ein offenbartes autonomes und/oder teilautonomes Transportfahrzeug;
- eine Transportkolonne.

Ferner kann das offenbarte System optional eine entfernte Vorrichtung, beispielsweise eine entfernte Transportdienstvorrichtung umfassen. Eine Transportdienstvorrichtung ist beispielsweise ein Server eines Transportdienstes, beispielsweise ein (z.B. zentraler) Backend-Server des Transportdienstes. Die Transportdienstvorrichtung dient beispielsweise zur Disponierung und Planung von Transportaufträgen und/oder Transportrouten für Transportfahrzeuge des Transportdiensts. Ein Transportdienst ist beispielsweise ein Zustelldienst, ein Postdienst, ein Paketdienst und/oder ein Kurierdienst.

Gemäß einem weiteren beispielhaften Aspekt der Erfindung wird ferner ein Computerprogramm offenbart, wobei das Computerprogramm Programmanweisungen umfasst, die dazu ausgebildet sind, bei Ausführung durch mindestens einen Prozessor eine Vorrichtung (z.B. eine offenbarte Steuervorrichtung für ein autonomes und/oder teilautonomes Transportfahrzeug) zu veranlassen, ein offenbartes Verfahren auszuführen.

Das offenbarte Computerprogramm kann beispielsweise über ein Netzwerk wie das Internet, ein Telefon- oder Mobilfunknetz und/oder ein lokales Netzwerk verteilbar sein. Das offenbarte Computerprogramm kann zumindest teilweise Software und/oder Firmware eines Prozessors sein. Es kann gleichermaßen zumindest teilweise als Hardware implementiert sein. Das offenbarte Computerprogramm kann beispielsweise auf einem computerlesbaren Speichermedium gespeichert sein, z.B. einem berührbaren, magnetischen, elektrischen, elektromagnetischen, optischen und/oder andersartigen Speichermedium. Das Speichermedium kann beispielsweise Teil eines Prozessors sein, beispielsweise ein (nicht-flüchtiger oder flüchtiger) Programmspeicher und/oder Hauptspeicher eines Prozessors oder ein Teil davon.

Das offenbarte Verfahren, die offenbarte Steuervorrichtung, das offenbarte Systems und das offenbarte Computerprogramm sind beispielsweise für ein autonomes und/oder teilautonomes Transportfahrzeug (und/oder für mehrere autonome und/oder teilautonome Transportfahrzeuge).

Im Folgenden werden die Eigenschaften des offenbarten Verfahrens, der offenbarten Steuervorrichtung, des offenbarten Transportfahrzeugs, des offenbarten Systems und des offenbarten Computerprogramms - teilweise beispielhaft - beschrieben.

Die offenbarte Steuervorrichtung für ein autonomes und/oder teilautonomes Transportfahrzeug ist beispielsweise eine werksseitig in das Transportfahrzeug verbaute Steuervorrichtung und steuert eine Vielzahl von Funktionen und/oder Mitteln des Fahrzeugs. Es ist jedoch auch denkbar, dass die Steuervorrichtung in das Transportfahrzeug nachrüstbar ist und beispielsweise nur Funktionen und Mittel des Transportfahrzeugs im Zusammenhang mit dem offenbarten Verfahren steuert.

Unter einem autonomen und/oder teilautonomen Fahrzeug (z.B. dem offenbarten autonomen und/oder teilautonomen Transportfahrzeug) soll beispielsweise ein Fahrzeug verstanden werden, dass eingerichtet ist, sich autonom und/oder zumindest teilweise autonom zu bewegen. Ein Fahrzeug soll beispielsweise als sich zumindest teilweise autonom bewegend verstanden werden, wenn sich das Fahrzeug zumindest auf einem Teil einer vorgegebenen Route selbsttätig (z.B. ohne Einfluss eines Fahrzeugführers) bewegt (z.B. fährt und/oder fliegt und/oder schwimmt) und entlang der vorgegebenen Route navigiert. Ein sich autonom bewegendes Fahrzeug bewegt sich beispielsweise auf der gesamten Route selbsttätig (z.B. ohne Einfluss eines Fahrzeugführers) und navigiert selbsttätig entlang der gesamten Route.

Das offenbarte autonome und/oder teilautonome Transportfahrzeug ist beispielsweise eingerichtet, sich autonom und/oder zumindest teilweise autonom zu bewegen. Zum Beispiel ist das Transportfahrzeug und/oder Mittel des Transportfahrzeugs (z.B. die offenbarte Steuervorrichtung) eingerichtet, das Transportfahrzeug derart zu steuern, dass es sich zumindest teilweise autonom entlang einer vorgegebenen Route bewegt, beispielsweise zumindest auf einem Teil der vorgegebenen Route selbsttätig (z.B. ohne Einfluss eines Fahrzeugführers) bewegt (z.B. fährt und/oder fliegt und/oder schwimmt) und entlang der vorgegebenen Strecke zu navigiert (z.B. lenkt). Ferner ist das autonome und/oder teilautonome Transportfahrzeug eingerichtet, einer Führungseinheit (z.B. einem vorausfahrenden Führungsfahrzeug) autonom zu folgen. Zum Beispiel umfasst das autonome und/oder teilautonome Transportfahrzeug geeignete Überwachungsmittel zum Überwachen der Umgebung des Bereichs vor und/oder neben und/oder hinter und/oder über und/oder unter dem Transportfahrzeug, um Hindernisse erkennen und selbsttätig umfahren zu können, wenn sich das Transportfahrzeug autonom (d.h. selbsttätig) bewegt, und/oder um einer Führungseinheit folgen zu können. Beispiele für solche Überwachungsmittel sind ein Laserscanner, ein Ultraschallscanner, eine Kamera und/oder ein Radarsystem.

Das Transportfahrzeug ist beispielsweise ein zumindest teilweise autonom fahrendes Landfahrzeug (z.B. ein Fahrrad, ein Dreirad, ein Pedelec, ein Personenkraftwagen, ein Lastkraftwagen, ein Schienenfahrzeug wie eine Lokomotive, ein unbemanntes Landfahrzeug und/oder ein Roboter), ein zumindest teilweise autonom fahrendes Wasserfahrzeug (z.B. ein Schiff wie ein Frachtschiff, ein Uboot und/oder ein unbemanntes Wasserfahrzeug) und/oder ein zumindest teilweise autonom fliegendes Luftfahrzeug (z.B. ein Flugzeug, ein Hubschrauber, ein unbemanntes Luftfahrzeug wie eine Drohne). Vorzugsweise ist das Transportfahrzeug ein unbemanntes Fahrzeug.

Unter dem Erhalten von Informationen (z.B. der Transportinformationen und/oder der Transportkolonneninformationen) im Rahmen des offenbarten Verfahrens soll beispielsweise verstanden werden, dass die Informationen an der Steuervorrichtung und/oder an dem Transportfahrzeug (z.B. durch Kommunikationsmittel der Steuervorrichtung und/oder des Transportfahrzeugs) empfangen werden. Zum Beispiel können Informationen an der Steuervorrichtung und/oder an dem Transportfahrzeug von einer entfernten Vorrichtung (z.B. einer entfernten Transportdienstvorrichtung) und/oder einer Führungseinheit (z.B. einem Führungsfahrzeug und/oder einem Funksender der Führungseinheit) einer Transportkolonne empfangen werden. Ferner können Informationen (z.B. die Transportinformation und/oder die Transportkolonneninfonnation) im Rahmen des offenbarten Verfahrens durch eine Benutzereingabe an der Steuervorrichtung und/oder an dem Transportfahrzeug (z.B. durch Erfassen einer Benutzereingabe durch Benutzereingabemittel der Steuervorrichtung und/oder des Transportfahrzeugs) erhalten werden. Ein weiteres Beispiel, wie Informationen (z.B. die Transportinformationen und/oder die Transportkolonneninformationen) im Rahmen des offenbarten Verfahrens erhalten werden können, ist das Bestimmen der Informationen durch die Steuervorrichtung und/oder das Transportfahrzeug (z.B. durch Mittel der Steuervorrichtung und/oder des Transportfahrzeugs wie einen Prozessor), so dass die Informationen als Ergebnis des Bestimmens erhalten werden.

Die Transportinformationen für den Transportauftrag enthalten und/oder repräsentieren beispielsweise mit dem Transportauftrag assoziierte Informationen wie beispielsweise eine Adress-, Positions- und/oder Koordinatenangabe der mit dem Transportauftrag assoziierten Zielposition, eine Adress-, Positions- und/oder Koordinatenangabe der mit dem Transportauftrag assoziierten Startposition und/oder mit der im Rahmen des Transportauftrag zu transportierenden Sendung assoziierte Sendungsinformationen (z.B. eine Kennung der Sendung, Informationen zum Gewicht und/oder zu den Abmessungen der Sendung, Informationen zum Absender und/oder Empfänger der Sendung, eine Sendungsabholzeitpunktvorgabe, eine Sendungsabholzeitraumvorgabe, eine Sendungsablieferungszeitraumvorgabe, und/oder eine Sendungsablieferungszeitpunktvorgabe). Die Transportinformationen können beispielsweise von einer entfernten Vorrichtung empfangen werden. Alternativ oder zusätzlich können die Transportinformationen beispielsweise bestimmt werden.

Eine Sendung ist beispielsweise ein Packstück, ein Stückgut, eine Paketsendung und/oder eine Briefsendung. Es versteht sich, dass eine Sendung eine Flüssigkeit, ein Gas oder ein Schüttgut umfassen oder dadurch gebildet sein kann.

Mit dem Transportauftrag wird das Transportfahrzeug beispielsweise beauftragt, eine Sendung von einer Startposition zu einer Zielposition zu transportieren. Unter einer mit dem Transportauftrag assoziierten Zielposition soll beispielsweise eine Position verstanden werden, an der eine im Rahmen des Transportauftrag zu transportierenden Sendung abgeliefert werden soll; und unter einer mit dem Transportauftrag assoziierten Startposition soll beispielsweise eine Position verstanden werden, an der eine im Rahmen des Transportauftrag zu transportierenden Sendung abgeholt werden soll. Die Startposition entspricht beispielsweise der Postanschrift des Absenders der Sendung und die Zielposition entspricht beispielsweise der Postanschrift des Empfängers der Sendung.

Dass die Transportinformationen für den Transportauftrag eine mit dem Transportauftrag assoziierte Zielposition repräsentieren soll beispielsweise derart verstanden werden, dass die Transportinformationen eine Adress-, Positions- und/oder Koordinatenangabe der mit dem Transportauftrag assoziierten Zielposition enthalten und/oder repräsentieren. Eine Adressangabe ist beispielsweise eine Repräsentation einer Postanschrift (z.B. einer Postanschrift eines Absenders und/oder Empfängers einer Sendung). Eine Koordinatenangabe ist beispielsweise eine Repräsentation von Koordinaten einer Position wie einer Startposition und/oder einer Zielposition (z.B. Koordinaten einer Position gemäß einem Satelliten gestützten Navigationssystem und/oder einem geographischen Koordinatensystem wie dem UTM (Universal Transverse Mercator) Koordinatensystem auf Basis des geodätischen Referenzsystem WGS84 (World Geodetic System 1984)).

Eine Transportkolonne umfasst beispielsweise zumindest eine Führungseinheit. Optional kann eine Transportkolonne ein oder mehrere weitere Fahrzeuge (z.B. autonome und/oder teilautonome Transportfahrzeuge) umfassen, die der Führungseinheit (z.B. autonom und/oder teilautonom) folgen. Die Führungseinheit ist beispielsweise ein Führungsfahrzeug. Das Führungsfahrzeug wird beispielsweise manuell durch einen Fahrzeugführer gesteuert. Alternativ kann das Führungsfahrzeug jedoch auch ein autonomes und/oder teilautonomes Fahrzeug sein. Das Führungsfahrzeug kann den folgenden Fahrzeugen beispielsweise Folgeinformationen (wie Fahrtgeschwindigkeitsinformationen und/oder Fahrtrichtungsinformationen) bereitstellen (z.B. in Form eines Funksignals senden), die die folgenden Fahrzeuge zum autonomen und/oder teilautonomen Folgen der Transportkolonne nutzen können. Ferner kann das Führungsfahrzeug Informationen von einem oder mehreren folgenden Fahrzeugen empfangen, beispielsweise um seine Bewegung (z.B. Fahrtrichtung und/oder Fahrtgeschwindigkeit) an eines oder mehrere der folgenden Fahrzeuge anpassen zu können (z.B. bei Störungen oder beim Anschluss an die Transportkolonne oder beim Verlassen der Transportkolonne beispielsweise die Geschwindigkeit anzupassen). Zum Beispiel ist das Führungsfahrzeug ein Landfahrzug (z.B. ein Fahrrad, ein Dreirad, ein Pedelec, ein Personenkraftwagen, ein Lastkraftwagen, ein Schienenfahrzeug wie eine Lokomotive, ein unbemanntes Landfahrzeug wie ein Roboter), ein Wasserfahrzeug (z.B. ein Schiff wie ein Frachtschiff, ein Uboot und/oder ein unbemanntes Wasserfahrzeug) und/oder ein Luftfahrzug (z.B. ein Flugzeug, ein Hubschrauber, ein unbemanntes Luftfahrzeug wie eine Drohne). Alternativ kann die Führungseinheit aber auch ein Mensch (z.B. ein Postbote und/oder ein Zusteller) und/oder ein Tier sein.

Die Transportkolonneninformationen enthalten und/oder repräsentieren zum Beispiel mit einer Transportkolonne assoziierte Informationen wie beispielsweise eine Kennung der Transportkolonne, Angaben zur Zusammensetzung der Transportkolonne, Angaben zur maximalen, minimalen und/oder durchschnittlichen Geschwindigkeit der Transportkolonne und/oder mit der geplante Route der Transportkolonne assoziierte Routeninformationen (z.B. Informationen zum Routenverlauf und/oder Informationen zum Geschwindigkeitsprofil). Dass die Transportkolonneninformationen eine Kennung einer Transportkolonne repräsentieren soll beispielsweise derart verstanden werden, dass die Transportkolonneninformationen eine Repräsentation der Kennung der Transportkolonne enthalten. Die Information zu Zusammensetzung der Transportkolonne können beispielsweise dynamisch sein und sich ändern, wenn sich ein Fahrzeug der Transportkolonne anschließt (d.h. der Transportkolonne zu folgen beginnt) und/oder ein Fahrzeug die Transportkolonne verlässt. Die Transportkolonneninformationen können beispielsweise von einer entfernten Vorrichtung und/oder einer Führungseinheit der Transportkolonne empfangen werden. Alternativ oder zusätzlich können die Transportkolonneninformationen beispielsweise bestimmt werden.

Die Kennung der Transportkolonne soll beispielsweise eine Identifizierung der Transportkolonne ermöglichen. Sie ist beispielsweise eine eindeutige und/oder zumindest in einer Region (z.B. der Region, in der sich die Transportkolonne bewegt) und/oder in einem System (z.B. dem offenbarten System) eindeutige Kennung, so dass sie eine eindeutige Identifizierung der Transportkolonne ermöglicht.

Unter einer Route soll beispielsweise eine Wegbeschreibung eines Wegs zwischen mehreren Positionen verstanden werden. Der Weg entspricht meist nicht der Luft- oder Sichtlinie zwischen diesen Positionen, sondern verläuft zum Beispiel entlang von Verkehrswegen wie Landverkehrswegen (z.B. Straßen, Fußwegen, Schienenwegen), Wasserverkehrswegen (z.B. Wasserstraßen wie schiffbare Flüsse und Kanäle) und/oder Luftverkehrswegen (z.B. Luftstraßen). Eine Route kann beispielsweise durch eine geordnete Liste von Wegpunktangaben repräsentiert werden, wobei jede Wegpunktangabe eine Position eines Wegpunkts eines Wegs repräsentiert, an der sich die Richtung des Wegs ändert.

Eine Route kann beispielsweise einen Weg für ein Transportfahrzeug und/oder eine Transportkolonne beschreiben. Dabei soll unter einem Weg für ein Transportfahrzeug und/oder eine Transportkolonne beispielsweise ein Weg verstanden werden, entlang dem sich das Transportfahrzeug und/oder die Transportkolonne bewegen kann. Dementsprechend wird eine Route beispielsweise abhängig von den Eigenschaften (z.B. der maximal zulässigen Geschwindigkeit und/oder äußeren Abmessungen) des Transportfahrzeugs und/oder der Transportkolonne bestimmt.

Die geplante Route der Transportkolonne beschreibt beispielsweise den Weg, entlang dem sich die Transportkolonne bewegen wird. Die geplante Route der Transportkolonne ist beispielsweise vorgegeben.

Die Transportroute zwischen der aktuellen Position des Transportfahrzeugs und der mit dem Transportauftrag assoziierten Zielposition wird im Folgenden auch als Transportroute für das Transportfahrzeug bezeichnet. Sie beschreibt beispielsweise einen möglichen Weg, entlang dem sich das Transportfahrzeug von der aktuellen Position des Transportfahrzeugs zu der mit dem Transportauftrag assoziierten Zielposition bewegen kann. Es versteht sich, dass es eine Vielzahl von möglichen Transportrouten zwischen der aktuellen Position des Transportfahrzeugs und der mit dem Transportauftrag assoziierten Zielposition geben kann, die verschiedene mögliche Wege, entlang derer sich das Transportfahrzeug von der aktuellen Position des Transportfahrzeugs zu der mit dem Transportauftrag assoziierten Zielposition bewegen kann, beschreiben. Die Transportroute für das Transportfahrzeug wird beispielsweise bestimmt und/oder aus der Vielzahl von möglichen Transportrouten ausgewählt.

Die aktuelle Position des Transportfahrzeugs entspricht beispielsweise einer Position, an der sich das Transportfahrzeug befindet, wenn das offenbarte Verfahren ausgeführt wird, und/oder einer zuletzt erfassten Position des Transportfahrzeugs (z.B. einer zuletzt durch Positionserfassungsmittel der Steuervorrichtung und/oder des Transportfahrzeugs erfassten Position).

Unter dem gemeinsamen Routenabschnitt soll beispielsweise ein Teil der geplanten Route der Transportkolonne und ein Teil der Transportroute für das Transportfahrzeug verstanden werden, die den gleichen Weg beschreiben. Zum Beispiel stimmen die geplante Route der Transportkolonne und die Transportroute für das Transportfahrzeug in dem gemeinsamen Routenabschnitt überein.

Unter einem Umgebungsparameter soll beispielsweise eine an der Steuervorrichtung und/oder dem Transportfahrzeug und/oder durch Erfassungsmittel (z.B. einen oder mehrerer Sensoren) der Steuervorrichtung und/oder des Transportfahrzeugs erfassbare Umgebungseigenschaft verstanden werden. Die Umgebungseigenschaft ist zum Beispiel eine in einer Umgebung der Steuervorrichtung und/oder des Transportfahrzeugs erfassbare physikalische oder chemische Größe und/oder Eigenschaft. Dabei kann die Umgebung der Steuervorrichtung und/oder des Transportfahrzeugs durch den Erfassungsbereich der Erfassungsmittel definiert sein.

Der erste Umgebungsparameter repräsentiert beispielsweise eine durch Erfassungsmittel (z.B. einen oder mehrere Sensoren) erfasste erste Umgebungseigenschaft. Insbesondere repräsentiert der erste Umgebungsparameter beispielsweise eine durch Erfassungsmittel (z.B. einen oder mehrere Sensoren) der Steuervorrichtung und/oder des Transportfahrzeugs erfasste erste Umgebungseigenschaft.

Als Ergebnis des Erfassens des ersten Umgebungsparameters wird beispielsweise eine erste Umgebungsparameterinformation erhalten, die den erfassten ersten Umgebungsparameter (z.B. einen erfassten Wert einer als ersten Umgebungsparameter erfassten physikalischen oder chemischen Größen) repräsentiert.

Unter dem Bewirken des Erfassens des ersten Umgebungsparameters soll beispielsweise verstanden werden, dass Erfassungsmittel (z.B. ein oder mehrere Sensoren) durch die Steuervorrichtung und/oder das Transportfahrzeug derart angesteuert werden, dass die Erfassungsmittel veranlasst werden, den ersten Umgebungsparameter zu erfassen. Dies ist zum Beispiel vorteilhaft, wenn die Erfassungsmittel kein Teil der Steuervorrichtung und/oder des Transportfahrzeugs sind.

Der erste Umgebungsparameter wird beispielsweise am Beginn und/oder in der Nähe des Beginns des gemeinsamen Routenabschnitts erfasst. Dabei soll der erste Umgebungsparameter beispielsweise als an und/oder in der Nähe des Beginns des gemeinsamen Routenabschnitts erfasst verstanden werden, wenn er durch Erfassungsmittel an einer Position mit einem Abstand von weniger als 100 m, vorzugsweise weniger als 25 m, besonders vorzugsweise weniger als 10 m von dem Beginn des gemeinsamen Routenabschnitts erfasst wird, und/oder, wenn er erfasst wird, während sich das Transportfahrzeug autonom und/oder teilautonom zu dem Beginn des gemeinsamen Routenabschnitts bewegt. Dies ist beispielsweise vorteilhaft, wenn die Position des Transportfahrzeugs nicht genau bestimmt werden kann. Zum Beispiel kann die Position des Transportfahrzeugs durch Positionserfassungsmittel der Steuervorrichtung und/oder des Transportfahrzeugs jeweils abhängig von der Umgebung mit unterschiedlichen Genauigkeiten erfasst werden, so dass beispielsweise nur bestimmt werden kann, dass sich das Transportfahrzeug dem Beginn des gemeinsamen Routenabschnitts nähert und/oder sich in der Nähe des Beginns des gemeinsamen Routenabschnitts befindet.

Das Erfassen des ersten Umgebungsparameters erfolgt beispielsweise kontinuierlich (z.B. in regelmäßigen oder unregelmäßigen Zeitabständen). Alternativ wird der erste Umgebungsparameter beispielsweise (z.B. nur) dann erfasst, wenn sich das Transportfahrzeug am Beginn und/oder in der Nähe des Beginns des gemeinsamen Routenabschnitts befindet oder wenn ein definierter (z.B. vorgegebener) Transportkolonnenankunftszeitpunkt und/oder Transportkolonnenankunftszeitraum (z.B. entspricht der definierte Transportkolonnenankunftszeitpunkt der erwarteten Ankunftszeit der Transportkolonne am Beginn des gemeinsamen Routenabschnitts und/oder der definierte Transportkolonnenankunftszeitraum entspricht dem Zeitraum zwischen der frühesten und der spätesten erwarteten Ankunftszeit der Transportkolonne am Beginn des gemeinsamen Routenabschnitts) erreicht wird.

Der Beginn des gemeinsamen Routenabschnitts entspricht zum Beispiel einer Position (z.B. einem Wegpunkt), an dem die geplante Route der Transportkolonne und die Transportroute für das Transportfahrzeug aufeinandertreffen (z.B. erstmalig aufeinandertreffen).

Zum Beispiel kann vorgesehen sein, dass sich das Transportfahrzeug autonom und/oder teilautonom zu dieser Position (d.h. zum Beginn des gemeinsamen Routenabschnitts) bewegt (z.B. entlang der Transportroute für das Transportfahrzeug zu dieser Position bewegt) und/oder an dieser Position (d.h. am Beginn des gemeinsamen Routenabschnitts) auf die Transportkolonne wartet.

Das Erkennen der Transportkolonne erfolgt zum Beispiel durch Bestimmen, ob die durch die Transportkolonneninformationen repräsentierte Kennung der Transportkolonne durch den erfassten ersten Umgebungsparameter und/oder die als Ergebnis des Erfassens des ersten Umgebungsparameters erhaltene erste Umgebungsparameterinformation repräsentiert wird. Dies kann beispielsweise mit Hilfe eines Erkennungsalgorithmus wie eines Bilderkennungsalgorithmus und/oder eines Mustererkennungsalgorithmus erfolgen.

Wenn die Transportkolonne zumindest teilweise basierend auf dem erfassten ersten Umgebungsparameter und der erhaltenen Transportkolonneninformationen erkannt wird, folgt das Transportfahrzeug der Transportkolonne und/oder es wird bewirkt, dass das Transportfahrzeug der Transportkolonne folgt. Dabei soll unter dem Folgen der Transportkolonne beispielsweise verstanden werden, dass sich das Transportfahrzeug derart bewegt, dass es dem letzten Fahrzeug der Transportkolonne oder einem anderen Fahrzeug der Transportkolonne folgt (z.B. mit einem vorgegebenen Abstand folgt) und sich somit der Transportkolonne anschließt (z.B. sich zwischen zwei Fahrzeugen der Transportkolonne oder hinter dem letzten Fahrzeug der Transportkolonne einreiht). Zum Beispiel bewegt sich das Transportfahrzeug entlang der gleichen Route wie die Transportkolonne (z.B. entlang des gemeinsamen Routenabschnitts der geplanten Transportroute der Transportkolonne und der Transportroute für das Transportfahrzeug), wenn es der Transportkolonne folgt.

Die Steuervorrichtung kann beispielsweise bewirken, dass das Transportfahrzeug der Transportkolonne folgt, indem sie das Transportfahrzeug und/oder Mittel des Transportfahrzeugs derart ansteuert, dass das Transportfahrzeug veranlasst wird, der Transportkolonne zu folgen.

Wenn das Transportfahrzeug der Transportkolonne folgt, wird es typsicherweise mit deutlich weniger komplexen Umgebungssituationen konfrontiert, da die Fahrtrichtung und Fahrtgeschwindigkeit des Transportfahrzeugs durch die Transportkolonne (d.h. in erster Linie durch die Führungseinheit der Transportkolonne) vorgegeben werden und das Transportfahrzeug diese nicht bestimmen (z.B. berechnen) muss. Das Transportfahrzeug kann und muss sich somit, wenn es der Transportkolonne folgt, darauf verlassen, dass das Transportfahrzeug bzw. der Fahrzeugführer des Transportfahrzeugs, die Umgebungssituation richtig analysiert und eine entsprechend angepasste Fahrtrichtung und Fahrtgeschwindigkeit bestimmt. Solange das Transportfahrzeug einer Transportkolonne folgt, kann es sich daher schneller und/oder auch in Bereichen mit einer komplexen Umgebungssituation bewegen.

Dies ist beispielsweise vorteilhaft, um das Transportfahrzeug auch über weitere Strecken oder in Bereichen, in denen es häufig zu komplexen Umgebungssituationen kommt, bewegen zu können, beispielsweise indem das Transportfahrzeug einer Transportkolonne über weitere Streckenabschnitte der Transportroute und/oder über Streckenabschnitte der Transportroute in Bereichen, in denen es häufig zu komplexen Umgebungssituationen kommt, folgt. Beispielsweise werden die Transportkolonneninformationen entsprechend bestimmt.

Weitere Vorteile der offenbarten Erfindung werden nachfolgend anhand beispielhafter Ausführungsformen des offenbarten Verfahrens, der offenbarten Steuervorrichtung, des offenbarten Transportfahrzeugs, des offenbarten Systems und des offenbarten Computerprogramms beschrieben.

In einer beispielhaften Ausführungsform der Erfindung umfasst das Verfahren ferner:
- Erfassen und/oder Bewirken des Erfassens einer Position des Transportfahrzeugs.

Das Erfassen der Position erfolgt beispielsweise durch ein Positionserfassungsmittel (z.B. Positionserfassungsmittel der Steuervorrichtung und/oder des Transportfahrzeugs). Ein Beispiel für ein solches Positionserfassungsmittel ist ein Positionssensor, zum Beispiel ein Positionssensor eines Satelliten gestützten Positionierungssystems wie dem GPS- (Global Positioning System) System, dem GLONASS-System, dem Galileo-System und/oder dem Beidou-System.

Alternativ oder zusätzlich erfolgt das Erfassen der Position zumindest teilweise durch das Erfassen von Kommunikationssignalen gemäß einer drahtlosen Kommunikationstechnik an der Position (z.B. durch drahtlose Kommunikationsmittel). Zum Beispiel kann zumindest teilweise in Abhängigkeit der an der Position erfassbaren drahtlosen Kommunikationssignale gemäß einer drahtlosen Kommunikationstechnik eine Triangulation und/oder Trilateration zum Bestimmen der Position durchgeführt werden.

Alternativ oder zusätzlich kann durch einen Abgleich mit Navigations- und/oder Kartendaten (z.B. Navigations- und/oder Kartendaten, die Straßenkarten, Schienennetzpläne, etc. repräsentieren) eine genauere Positionsbestimmung und/oder Positionsplausibilisierung erfolgen.
Zum Beispiel kann die Position des Transportfahrzeugs zumindest teilweise basierend auf Bewegungsinformationen des Transportfahrzeugs erfasst werden. Zum Beispiel repräsentieren die Bewegungsinformationen vergangene (d.h. ausgeführte und/oder erfasste) Richtungs- und/oder Geschwindigkeitsänderungen des Transportfahrzeugs. Zum Beispiel weist die Steuervorrichtung und/oder das Transportfahrzeug einen oder mehrere Bewegungssensoren (z.B. einen Beschleunigungssensor, ein Gyroskop und/oder einen Geschwindigkeitssensor) auf, die eingerichtet sind, Richtungs- und/oder Geschwindigkeitsänderungen des Transportfahrzeugs zu erfassen. Anschließend kann beispielsweise durch einen Abgleich mit der Transportroute für das Transportfahrzeug, der durch das Transportfahrzeug bereits zurückgelegte Abschnitt der Transportroute bestimmt und somit eine Position des Transportfahrzeugs erfasst werden. Alternativ oder zusätzlich kann der Abgleich auch mit Karten- und/oder Navigationsdaten (z.B. Navigations- und/oder Kartendaten, die Straßenkarten, Schienennetzpläne, etc. repräsentieren) durchgeführt werden und/oder durch eine durch Positionserfassungsmittel erfasste Position plausibilisiert werden.

Ferner kann die Position des Transportfahrzeugs zumindest teilweise basierend auf charakteristischen Umgebungseigenschaften wie einer charakteristischen Landmarke, Hausnummer, Straßennamen, etc., die durch geeigneten Erfassungsmittel der Steuervorrichtung und/oder des Transportfahrzeugs erfasst werden, bestimmt werden.

Das Erfassen der Position erfolgt beispielsweise kontinuierlich (z.B. in regelmäßigen oder unregelmäßigen Zeitabständen).

Die Genauigkeit der erfassten Position kann jeweils abhängig von der jeweiligen Umgebung des Transportfahrzeugs verschieden sein. Zum Beispiel kann die Genauigkeit einer erfassten Position 5 m oder 15 m oder 50 m betragen, um einige Beispiele zu nennen. So kann eine durch einen Positionssensor eines satellitengestützten Navigationssystems beispielsweise in bebauten Gebieten und/oder innerhalb von Gebäuden erfasste Position ungenauer sein als eine in unbebauten Gebieten und/oder außerhalb von Gebäuden erfasste Position.

Unter dem Bewirken des Erfassens einer Position des Transportfahrzeugs soll beispielsweise verstanden werden, dass Positions- und/oder Kommunikationsmittel (z.B. ein oder mehrere Sensoren) durch die Steuervorrichtung und/oder das Transportfahrzeug derart angesteuert werden, dass die Positions- und/oder Kommunikationsmittel veranlasst werden, die Position des Transportfahrzeugs zu erfassen und/oder Kommunikationssignale zum Bestimmen der Position des Transportfahrzeugs zu erfassen. Dies ist zum Beispiel vorteilhaft, wenn die Positions- und/oder Kommunikationsmittel kein Teil der Steuervorrichtung und/oder des Transportfahrzeugs sind.

Als Ergebnis des Erfassens der Position des Transportfahrzeugs wird beispielsweise eine Positionsinformation erhalten, die die erfasste Position (z.B. in Form einer Positions- und/oder Koordinatenangabe) repräsentiert.

Die erfasste Position des Transportfahrzeugs kann beispielsweise zur Navigation entlang einer vorgegebenen Route (z.B. der Transportroute für das Transportfahrzeug) verwendet werden, zum Beispiel wenn sich das Transportfahrzeug autonom und/oder teilautonom bewegt.

In einer beispielhaften Ausführungsform der Erfindung umfasst das Verfahren ferner:
- wenn sich die Transportkolonne am Ende und/oder in der Nähe des Endes des gemeinsamen Routenabschnitts befindet, Verlassen der Transportkolonne durch das Transportfahrzeug und/oder Bewirken, dass das Transportfahrzeug die Transportkolonne verlässt.

Unter dem Verlassen der Transportkolonne soll beispielsweise verstanden werden, dass sich das Transportfahrzeug derart bewegt, dass es dem vorausfahrenden Fahrzeug der Transportkolonne (z.B. dem unmittelbar vorausfahrenden Fahrzeug der Transportkolonne und/oder dem Fahrzeug der Transportkolonne, dem das Transportfahrzeug (z.B. bislang) gefolgt ist,) nicht (z.B. nicht mehr) folgt. Zum Beispiel bewegt sich das Transportfahrzeug entlang einer anderen Route als die Transportkolonne, wenn es die Transportkolonne verlässt.

Ferner kann das Transportfahrzug der Führungseinheit und/oder anderen Fahrzeugen der Transportkolonne entsprechende Informationen bereitstellen, dass das Transportfahrzeug die Transportkolonne verlässt. Die Führungseinheit kann diese Informationen beispielsweise nutzen, um Informationen (z.B. Transportkolonneninformationen), die die Zusammensetzung der Transportkolonne repräsentieren und/oder enthalten, zu aktualisieren. Die anderen Fahrzeuge der Transportkolonne können diese Informationen zum Beispiel nutzen, um eine Lücke in der Transportkolonne, die dadurch entsteht, dass das Transportfahrzeug die Transportkolonne verlässt, zu schließen (z.B. bewirkt diese Information, dass ein Fahrzeug, das bislang dem Transportfahrzeug gefolgt ist, nun dem Fahrzeug, dem das Transportfahrzeug bislang gefolgt ist, folgt und/oder zu diesem Fahrzeug aufschließt).

Die Steuervorrichtung kann beispielsweise bewirken, dass das Transportfahrzeug die Transportkolonne verlässt, indem sie das Transportfahrzeug und/oder Mittel des Transportfahrzeugs derart ansteuert, dass das Transportfahrzeug veranlasst wird, die Transportkolonne zu verlassen.

Dass das Verlassen der Transportkolonne an und/oder in der Nähe des Endes des gemeinsamen Routenabschnitts erfolgt, soll beispielsweise derart verstanden werden, dass das Transportfahrzeug die Transportkolonne an einer Position mit einem Abstand von weniger als 100 m, vorzugsweise weniger als 25 m, besonders vorzugsweise weniger als 10 m von dem Ende des gemeinsamen Routenabschnitts verlässt. Dies ist beispielsweise vorteilhaft, wenn die Position des Transportfahrzeugs nicht genau bestimmt werden kann. Wie oben offenbart, kann die Position des Transportfahrzeugs durch Positionserfassungsmittel der Steuervorrichtung und/oder des Transportfahrzeugs jeweils abhängig von der Umgebung mit unterschiedlichen Genauigkeiten erfasst werden.

Das Ende des gemeinsamen Routenabschnitts entspricht zum Beispiel einer Position (z.B. einem Wegpunkt), an dem sich die geplante Route der Transportkolonne und die Transportroute für das Transportfahrzeug voneinander trennen (z.B. erstmalig voneinander trennen).

Zum Beispiel treffen die geplante Route der Transportkolonne und die Transportroute für das Transportfahrzeugs an dem Beginn des gemeinsamen Routenabschnitts aufeinander und trennen sich an dem Ende des gemeinsamen Routenabschnitts. Der Beginn und das Ende des gemeinsamen Routenabschnitts entsprechen beispielsweise Positionen (z.B. Wegpunkten), die sowohl auf der geplanten Route der Transportkolonne als auch auf der Transportroute für das Transportfahrzeug liegen.

Das Verfahren kann ferner umfassen:
- autonomes und/oder teilautonomes Bewegen und/oder Bewirken des autonomen und/oder teilautonomen Bewegens des Transportfahrzeugs zu der mit dem Transportauftrag assoziierten Zielposition.

Zum Beispiel kann das autonome und/oder teilautonome Bewegen und/oder das Bewirken des autonomen und/oder teilautonomen Bewegens des Transportfahrzeugs zu der mit dem Transportauftrag assoziierten Zielposition erfolgen, wenn das Transportfahrzeug die Transportkolonne verlassen hat. Zum Beispiel bewegt sich das Transportfahrzeug, wenn es die Transportkolonne verlassen hat, entlang (z.B. weiterhin entlang) der Transportroute für das Transportfahrzeug zu der mit dem Transportauftrag assoziierten Zielposition.

Optional, kann das Verfahren ferner umfassen:
- Erfassen und/oder Bewirken des Erfassens eines zweiten Umgebungsparameters;
- Erkennen der Zielposition zumindest teilweise basierend auf dem erfassten zweiten Umgebungsparameter, wobei sich das Transportfahrzeug autonom und/oder teilautonom zu der erkannten Zielposition bewegt und/oder das autonome und/oder teilautonome Bewegen des Transportfahrzeugs zu der erkannten Zielposition bewirkt wird.

Der zweite Umgebungsparameter repräsentiert beispielsweise eine durch Erfassungsmittel (z.B. einen oder mehrere Sensoren) erfasste zweite Umgebungseigenschaft. Insbesondere repräsentiert der zweite Umgebungsparameter beispielsweise eine durch Erfassungsmittel (z.B. einen oder mehrere Sensoren) der Steuervorrichtung und/oder des Transportfahrzeugs erfasste zweite Umgebungseigenschaft. Der erste und der zweite Umgebungsparameter können beispielsweise durch die gleichen oder durch verschiedene Erfassungsmittel erfasst werden.

Als Ergebnis des Erfassens des zweiten Umgebungsparameters wird beispielsweise eine zweite Umgebungsparameterinformation erhalten, die den erfassten zweiten Umgebungsparameter (z.B. einen erfassten Wert einer als zweiten Umgebungsparameter erfassten physikalischen oder chemischen Größen) repräsentiert.

Unter dem Bewirken des Erfassens des zweiten Umgebungsparameters soll beispielsweise verstanden werden, dass Erfassungsmittel (z.B. ein oder mehrere Sensoren) durch die Steuervorrichtung und/oder das Transportfahrzeug derart angesteuert werden, dass die Erfassungsmittel veranlasst werden, den zweiten Umgebungsparameter zu erfassen. Dies ist zum Beispiel vorteilhaft, wenn die Erfassungsmittel kein Teil der Steuervorrichtung und/oder des Transportfahrzeugs sind.

Der zweite Umgebungsparameter soll beispielsweise an und/oder in der Nähe der mit dem Transportauftrag assoziierten Zielposition verstanden werden. Dabei soll der zweite Umgebungsparameter zum Beispiel als an und/oder in der Nähe Zielposition erfasst verstanden werden, wenn er durch Erfassungsmittel an einer Position mit einem Abstand von weniger als 100 m, vorzugsweise weniger als 25 m, besonders vorzugsweise weniger als 10 m von Zielposition erfasst wird und/oder wenn er durch Erfassungsmittel erfasst wird, nachdem das Transportfahrzeug die Transportkolonne verlassen hat. Dies ist beispielsweise vorteilhaft, wenn die Position des Transportfahrzeugs nicht genau bestimmt werden kann.

Das Erfassen des zweiten Umgebungsparameters erfolgt beispielsweise kontinuierlich (z.B. in regelmäßigen oder unregelmäßigen Zeitabständen). Alternativ wird der erste Umgebungsparameter beispielsweise (z.B. nur) dann erfasst, wenn sich das Transportfahrzeug an und/oder in der Nähe der mit dem Transportauftrag assoziierten Zielposition befindet und/oder wenn ein definierter (z.B. vorgegebener) Sendungsablieferungszeitpunkt und/oder Sendungsablieferungszeitraum (z.B. entspricht der definierte Sendungsablieferungszeitpunkt dem erwarteten und/oder vorgegebenen Zeitpunkt der Ablieferung der Sendung an der Zielposition und/oder der definierte Sendungsablieferungszeitraum ist der Zeitraum zwischen einem frühesten Zeitpunkt und einem spätesten Zeitpunkt, zwischen denen eine Ablieferung der Sendung an der Zielposition erwartetet wird und/oder vorgegebenen ist) erreicht ist.

Das Erkennen der Zielposition erfolgt zum Beispiel durch Bestimmen, ob der erfasste zweite Umgebungsparameter eine für die Zielposition charakteristische Umgebungseigenschaft repräsentiert.

Zum Beispiel kann die Zielposition durch eine charakteristische Landmarke (z.B. ein Gebäude), die durch den zweiten Umgebungsparameter (z.B. ein durch optische Erfassungsmittel (z.B. einen optischen Sensor) erfasstes Bild der Umgebung) repräsentiert wird, erkannt werden. Zum Beispiel wird diese charakteristische Landmarke durch die Transportinformationen repräsentiert. Dementsprechend kann das Erfassen des zweiten Umgebungsparameters durch Erfassen eines Bilds einer Umgebung des Transportfahrzeugs erfolgen. Das Bild wird beispielsweise durch einen Bildsensor und/oder eine Video- und/oder Fotokamera der Steuervorrichtung und/oder des Transportfahrzeugs erfasst. Anschließend kann beispielsweise ein Muster- und/oder Bilderkennungsalgorithmus auf das erfasste Bild angewendet werden, um zu bestimmen, ob die charakteristische Landmarke der Zielposition darin enthalten und/oder dadurch repräsentiert wird.

Alternativ oder zusätzlich können die Transportinformationen eine Kennung der Zielposition repräsentieren, wobei die Zielposition zumindest teilweise basierend auf dem erfassten zweiten Umgebungsparameter erkannt wird, wenn der erfassten zweiten Umgebungsparameter eine Repräsentation der Kennung der Zielposition (d.h. eine für Zielposition charakteristische Umgebungseigenschaft) enthält.

Die Kennung der Zielposition soll beispielsweise eine Identifizierung der Zielposition ermöglichen. Sie ist beispielsweise eine eindeutige und/oder zumindest in einer Region (z.B. der Region, in der sich die Zielposition befindet) und/oder in einem System (z.B. dem offenbarten System) eindeutige Kennung, so dass sie eine eindeutige Identifizierung der Zielposition ermöglicht.

Die Kennung der Zielposition ist beispielsweise eine drahtlos erfassbare Kennung, insbesondere eine optische Kennung und/oder eine Funksignalkennung.

Unter einer optischen Kennung soll beispielsweise eine optisch erfassbare Kennung verstanden werden. Beispiele für eine optische Kennung sind ein Muster (z.B. ein QR-Code und/oder ein Barcode) und/oder eine Zeichen- und/oder Ziffernfolge.

Zum Beispiel befindet sich an und/oder in der Nähe der Zielposition eine solche optische Kennung.

Wenn die Kennung der Zielposition eine optische Kennung ist, wird der zweite Umgebungsparameter beispielsweise durch optische Erfassungsmittel (z.B. einen optischen Sensor) erfasst. Solche optischen Erfassungsmittel sind zum Beispiel lichtempfindliche Bauelemente wie ein Bildsensor, ein CCD-Sensor (Charge Coupled Device), ein APS-Sensor (Active Pixel Sensor) und/oder eine Fotowiderstand. Ferner können auch optische Datenerfassungsgeräte wie eine digitale Video- und/oder Fotokamera und/oder ein Barcodelesegerät als optisches Erfassungsmittel verstanden werden.

Zum Beispiel ist der zweite Umgebungsparameter eine Repräsentation einer optisch erfassbaren Umgebung der Steuervorrichtung und/oder des Transportfahrzeugs. Ein Beispiel für eine solche Repräsentation ist ein Bild, das eine Darstellung (z.B. eine zwei- oder dreidimensionale Darstellung und/oder eine graphische Darstellung) einer Umgebung des Transportfahrzeugs repräsentiert. Dementsprechend kann das Erfassen des zweiten Umgebungsparameters durch Erfassen eines Bilds einer Umgebung des Transportfahrzeugs erfolgen. Das Bild wird beispielsweise durch einen Bildsensor und/oder eine Video- und/oder Fotokamera der Steuervorrichtung und/oder des Transportfahrzeugs erfasst. Anschließend kann beispielsweise ein Muster- und/oder Bilderkennungsalgorithmus auf das erfasste Bild angewendet werden, um zu bestimmen, ob die Kennung der Zielposition darin enthalten und/oder dadurch repräsentiert wird.

Ferner kann beispielsweise die Richtung, in der sich die Kennung befindet, bestimmt werden. Als Ergebnis des Bestimmens wird beispielsweise eine Richtungsinformation erhalten, die Richtung, in der sich die Kennung befindet, repräsentiert. Wenn sich die Kennung an der Zielposition befindet, kann basierend auf dieser Richtungsinformation beispielsweise eine Fahrtrichtung des Transportfahrzeugs in Richtung der Zielposition bestimmt werden, zum Beispiel um ein autonomes und/oder teilautonomes Bewegen des Transportfahrzeugs in Richtung der Zielposition zu ermöglichen. Dadurch kann eine genaue Navigation des Transportfahrzeugs zu der Zielposition auch dann ermöglicht werden, wenn nur ein ungenaues Erfassen einer Position des Transportfahrzeugs durch Positionserfassungsmittel möglich ist.

Unter einer Funksignalkennung soll beispielsweise eine in einem Funksignal übertragbare und/oder durch ein Funksignal repräsentierbare Kennung verstanden werden. Beispiele für eine Funksignalkennung sind eine Adresse (z.B. eine MAC-Adresse (Media-Access-Control) und/oder eine IP-Adresse (Internet Protocol)), ein Name (z.B. ein Netzwerkname) und/oder ein Identifikator wie eine SSID (Service Set Identification) und/oder eine BSSID (Basic Service Set Identification). Es versteht sich, dass die Funksignalkennung auch in einem andersartigen Funksignal (z.B. einem proprietären Funksignal) übertragen werden kann.

Zum Beispiel befindet sich an und/oder in der Nähe der Zielposition ein Funksender, der eingerichtet ist ein Funksignal, das eine solche Funksignalkennung enthält und/oder repräsentiert, auszusenden. Das Funksignal wird beispielsweise automatisch und/oder kontinuierlich (z.B. in regelmäßigen und/oder unregelmäßigen Zeitabständen) durch den Funksender ausgesendet. Alternativ oder zusätzlich kann das Aussenden des Funksignals beispielsweise in Antwort auf eine entsprechende (z.B. durch Kommunikationsmittel der Steuervorrichtung und/oder des Transportfahrzeugs ausgesendete) Anfrage erfolgen. Die Funksignalkennung ist beispielsweise eine Adresse, ein Name und/oder ein Identifikator des Funksenders. Ein Beispiel für einen solchen Funksender ist beispielsweise ein Bluetooth-Beacon und/oder ein WLAN-Zugangspunkt. Wenn sich weitere Funksender innerhalb der Funkreichweite des Funksenders an und/oder in der Nähe der Zielposition befinden, können die verschiedenen Funksender ihre Funksendefrequenzen und/oder Funksendezeitschlitze zum Senden der jeweiligen Funksignale durch die verschiedenen Funksender derart abstimmen, dass Funksignalüberlagerungen und/oder -störungen vermieden werden.

Wenn die Kennung eine Funksignalkennung ist, wird der zweite Umgebungsparameter beispielsweise durch Funkkommunikations- und/oder Funkempfangsmittel (z.B. eine Funkschnittstelle) empfangen. Dementsprechend kann das Erfassen des zweiten Umgebungsparameters durch Empfangen eines Funksignals durch Funkkommunikations- und/oder Funkempfangsmittel (z.B. eine Funkschnittstelle) der Steuervorrichtung und/oder des Transportfahrzeugs erfolgen. Zum Beispiel ist der zweite Umgebungsparameter eine Repräsentation einer in einem empfangenen Funksignal enthaltenen und/oder einer durch ein empfangenes Funksignal repräsentierten Kennung. Zum Beispiel kann die in einem empfangenen Funksignal enthaltenen und/oder dadurch repräsentierte Kennung, aus dem Funksignal extrahiert und anschließend mit der Kennung der Zielposition verglichen werden, um zu bestimmen, ob die Kennung der Zielposition darin enthalten und/oder dadurch repräsentiert wird.

Ferner kann beispielsweise die Empfangsrichtung und/oder die Ausbreitungsrichtung des Funksignals bestimmt werden. Als Ergebnis des Bestimmens wird beispielsweise eine Richtungsinformation erhalten, die die Empfangsrichtung und/oder die Ausbreitungsrichtung des Funksignals repräsentiert. Wenn sich das Funksender an der Zielposition befindet, kann basierend auf dieser Richtungsinformation beispielsweise eine Fahrtrichtung des Transportfahrzeugs in Richtung der Zielposition bestimmt werden, zum Beispiel um ein autonomes und/oder teilautonomes Bewegen des Transportfahrzeugs in Richtung der Zielposition zu ermöglichen. Dadurch kann eine genaue Navigation des Transportfahrzeugs zu der Zielposition auch dann ermöglicht werden, wenn nur ein ungenaues Erfassen einer Position des Transportfahrzeugs durch Positionserfassungsmittel möglich ist.Es versteht sich, dass das Verlassen der Transportkolonne und/oder das Erkennen der Zielposition alternativ oder zusätzlich zumindest teilweise basierend auf einer erfassten Position des Transportfahrzeugs und Routen- und/oder Kartendaten (z.B. Navigations- und/oder Kartendaten, die Straßenkarten, Schienennetzpläne, etc. repräsentieren) erfolgen kann. Wie oben offenbart, kann das Erfassen der Position beispielsweise zumindest teilweise basierend auf Bewegungsinformationen des Transportfahrzeugs erfolgen. Zum Beispiel repräsentieren die Bewegungsinformationen vergangene (d.h. ausgeführte und/oder erfasste) Richtungs- und/oder Geschwindigkeitsänderungen des Transportfahrzeugs. Zum Beispiel weist die Steuervorrichtung und/oder das Transportfahrzeug einen oder mehrere Bewegungssensoren (z.B. einen Beschleunigungssensor, ein Gyroskop und/oder einen Geschwindigkeitssensor) auf, die eingerichtet sind, Richtungs- und/oder Geschwindigkeitsänderungen des Transportfahrzeugs zu erfassen. Anschließend kann beispielsweise durch einen Abgleich mit der Transportroute für das Transportfahrzeug der durch das Transportfahrzeug bereits zurückgelegte Abschnitt der Transportroute bestimmt und somit auch eine Position des Transportfahrzeugs bestimmt werden. Wenn sich dadurch ergibt, dass sich das Transportfahrzeug am Ende und/oder in der Nähe des Endes des gemeinsamen Routenabschnitts befindet, verlässt das Transportfahrzeug zum Beispiel die Transportkolonnen und/oder es wird bewirkt, dass das das Transportfahrzeug die Transportkolonne verlässt. Anschließend kann sich das Transportfahrzeug autonom und/oder teilautonom zu der Zielposition bewegen, z.B. basierend auf Karten- und/oder Navigationsdaten. Ferner kann die Position des Transportfahrzeugs und somit die Navigation zu der Zielposition zumindest teilweise basierend auf charakteristischen Umgebungseigenschaften wie einer charakteristischen Landmarke, Hausnummer, Straßennamen, etc., die durch geeigneten Erfassungsmittel der Steuervorrichtung und/oder des Transportfahrzeugs erfasst werden, bestimmt werden.

In einer beispielhaften Ausführungsform der Erfindung wird die Transportkolonne zumindest teilweise basierend auf dem erfassten ersten Umgebungsparameter erkannt, wenn der erfasste erste Umgebungsparameter eine Repräsentation der Kennung der Transportkolonne enthält.

Zum Beispiel ist die Kennung der Transportkolonne eine drahtlos erfassbare Kennung, insbesondere eine optische Kennung und/oder eine Funksignalkennung. Wie oben offenbart, soll unter einer optischen Kennung beispielsweise eine optisch erfassbare Kennung verstanden werden.

Zum Beispiel befindet sich an und/oder auf der Führungseinheit der Transportkolonne eine optische Kennung. Zum Beispiel befindet sich an und/oder auf jedem Fahrzeug der Transportkolonne eine optische Kennung. Dementsprechend soll unter einer optischen Kennung der Transportkolonne auch eine optische Kennung der Führungseinheit und/oder eines Fahrzeugs der Transportkolonne verstanden werden.

Ferner soll auch unter einer Kombination der optischen Kennung der Führungseinheit und/oder der Kennung(en) einer oder mehrerer weiterer Fahrzeuge der Transportkolonnen die Kennung der Transportkolonne verstanden werden. In diesem Fall repräsentiert die Kennung der Transportkolonne beispielsweise Rückschlüsse auf die Zusammensetzung der Transportkolonne und ändert sich, wenn sich die Zusammensetzung ändert. Ferner kann auch in diesem Fall auf die Auslastung (z.B. die Kapazitätsauslastung) der Transportkolonne geschlossen werden. Es versteht sich, dass Informationen, die eine Änderung der Zusammensetzung und/oder der Kennung der Transportkolonne repräsentieren, (z.B. durch die Transportkolonne und/oder die Führungseinheit der Transportkolonne) bereitgestellt (z.B. an eine entfernte Vorrichtung wie die Transportdienstvorrichtung und/oder das Transportfahrzeug gesendet) werden können.

Wenn die Kennung der Transportkolonne eine optische Kennung ist, wird der erste Umgebungsparameter beispielsweise durch optische Erfassungsmittel (z.B. einen optischen Sensor) erfasst. Dementsprechend kann das Erfassen des ersten Umgebungsparameters durch Erfassen eines Bilds einer Umgebung des Transportfahrzeugs erfolgen. Das Bild wird beispielsweise durch einen Bildsensor und/oder eine Video- und/oder Fotokamera der Steuervorrichtung und/oder des Transportfahrzeugs erfasst.

Wie ebenfalls oben offenbart, soll unter einer Funksignalkennung beispielsweise eine in einem Funksignal übertragbare und/oder durch ein Funksignal repräsentierbare Kennung verstanden werden. Zum Beispiel weist die Führungseinheit und/oder zumindest ein anderes Fahrzeug der Transportkolonne einen Funksender auf, der eingerichtet ist, ein Funksignal, das eine solche Funksignalkennung enthält und/oder repräsentiert, auszusenden. Die Funksignalkennung ist dann beispielsweise eine Adresse, ein Name und/oder ein Identifikator dieses Funksenders. Dementsprechend soll unter einer Funksignalkennung der Transportkolonne auch eine Funksignalkennung eines Funksenders der Führungseinheit und/oder eines Fahrzeugs der Transportkolonne verstanden werden.

Wenn die Kennung eine Funksignalkennung ist, wird der erste Umgebungsparameter beispielsweise durch Funkkommunikations- und/oder Funkempfangsmittel (z.B. eine Funkschnittstelle) empfangen. Dementsprechend kann das Erfassen des ersten Umgebungsparameters durch Empfangen eines Funksignals durch Funkkommunikations- und/oder Funkempfangsmittel (z.B. eine Funkschnittstelle) der Steuervorrichtung und/oder des Transportfahrzeugs erfolgen. Zum Beispiel ist der erste Umgebungsparameter eine Repräsentation einer in einem empfangenen Funksignal enthaltenen und/oder einer durch ein empfangenes Funksignal repräsentierten Kennung.

In einer beispielhaften Ausführungsform der Erfindung umfasst das Verfahren ferner:
- Bestimmen und/oder Bewirken des Bestimmens der Transportroute zwischen der aktuellen Position des Transportfahrzeugs und der mit dem Transportauftrag assoziierten Zielposition.

Das Bestimmen der Transportroute für das Transportfahrzeug und/oder der Vielzahl von möglichen Transportrouten kann beispielsweise zumindest teilweise basierend auf Navigations- und/oder Kartendaten erfolgen. Wie oben offenbart, kann die Transportroute für das Transportfahrzeug (d.h. die Transportroute zwischen der aktuellen Position des Transportfahrzeugs und der mit dem Transportauftrag assoziierten Zielposition) beispielsweise aus einer Vielzahl möglicher Transportrouten ausgewählt werden. Die Auswahl kann beispielsweise anhand einer oder mehrere vorgegebener Routenkriterien (z.B. schnellste Route, kürzeste Route, erwartete Routenkapazitätsengpässe und/oder ein oder mehreren weiteren Zwischenzielpositionen) erfolgen. Ferner kann bei der Auswahl auch berücksichtigt werden, ob die Transportroute (insbesondere über weite Streckenabschnitte der Transportroute und/oder über Streckenabschnitte der Transportroute in Bereichen, in denen es häufig zu komplexen Umgebungssituationen kommt) gemeinsame Routenabschnitte mit geplanten Routen einer oder mehrerer Transportkolonnen aufweist.

Als Ergebnis des Bestimmens der Transportroute werden beispielsweise Transportrouteninformationen, die die Transportroute für das Transportfahrzeug repräsentieren, erhalten. Wie oben offenbart, kann eine Route als Wegbeschreibung eines Wegs zwischen mehreren Positionen verstanden und beispielsweise durch eine geordnete Liste von Wegpunktangaben repräsentiert werden, wobei jede Wegpunktangabe eine Position eines Wegpunkts des Wegs repräsentiert, an der sich die Richtung des Wegs ändert.

Unter dem Bewirken des Bestimmens der Transportroute für das Transportfahrzeug soll beispielsweise verstanden werden, dass eine Anfrage zum Bestimmen der Transportroute für das Transportfahrzeug an eine entfernte Vorrichtung (z.B. einen entfernten Server wie einen Navigationsserver und/oder einer Transportdienstvorrichtung) gesendet wird, um die entfernte Vorrichtung zu veranlassen, die Transportroute für das Transportfahrzeug zu bestimmen. Anschließend können entsprechende Transportrouteninformationen von der entfernten Vorrichtung empfangen werden.

In einer beispielhaften Ausführungsform der Erfindung umfasst das Erhalten der Transportkolonneninformationen:
- Bestimmen der Transportkolonneninformationen zumindest teilweise basierend auf der Transportroute für das Transportfahrzeug und/oder mehreren möglichen Transportrouten für das Transportfahrzeug.

Zum Beispiel wird die Transportkolonneninformationen als Ergebnis des Bestimmens der Transportkolonneninformationen zumindest teilweise basierend auf der Transportroute für das Transportfahrzeug erhalten.

Zum Bestimmen der Transportkolonneninformationen kann beispielsweise die Transportroute für das Transportfahrzeug (und/oder mehrere mögliche Transportrouten für das Transportfahrzeug) mit den für eine oder mehrere Transportkolonnen geplante Routen verglichen werden. Zum Beispiel repräsentieren die Transportkolonneninformationen die Kennung(en) der Transportkolonnen, für die der Vergleich ergibt, dass deren geplante Routen jeweils einen gemeinsamen Routenabschnitt mit der Transportroute für das Transportfahrzeug aufweisen. Routeninformationen, die die geplanten Routen der Transportkolonnen repräsentieren, werden beispielsweise durch die Steuervorrichtung und/oder das Transportfahrzeug bereitgehalten (z.B. in Form einer Datenbank in einem Speicher der Steuervorrichtung und/oder des Transportfahrzeugs gespeichert). In diesem Fall erfolgt das Bestimmen der Transportkolonneninformationen ferner zumindest teilweise basierend auf solchen durch das Transportfahrzeug und/oder die Steuervorrichtung bereitgehaltenen Routeninformationen.

Alternativ können beispielsweise Routeninformationen, die zumindest die geplante Route einer Transportkolonne repräsentieren, durch die Steuervorrichtung und/oder das Transportfahrzeug empfangen werden (z.B. durch Kommunikationsmittel der Steuervorrichtung und/oder des Transportfahrzeugs empfangen werden). Zum Beispiel weist die Führungseinheit und/oder zumindest ein anderes Fahrzeug der Transportkolonne einen Funksender auf, der eingerichtet ist, ein Funksignal, das solche Routeninformationen und beispielsweise eine Funksignalkennung der Transportkolonne enthält und/oder repräsentiert, auszusenden. Wenn sich das Transportfahrzeug in der Empfangsreichweite der Transportkolonne befindet, kann es das Funksignal empfangen, und die Transportroute für das Transportfahrzeug (und/oder mehrere mögliche Transportrouten für das Transportfahrzeug) mit der für die Transportkolonne geplanten Route, die durch die Routeninformationen repräsentiert wird, vergleichen. Wenn die geplante Route der Transportkolonne einen gemeinsamen Routenabschnitt mit der Transportroute für das Transportfahrzeug (und/oder zumindest einer der mehreren mögliche Transportrouten für das Transportfahrzeug) aufweist, wird als Ergebnis beispielsweise eine Transportkolonneninformation erhalten, die die Funksignalkennung dieser Transportkolonne repräsentiert.

Diese Ausführungsform ermöglicht eine dezentrale Koordinierung von Transportkolonnen, Transportaufträgen und Transportrouten für Transportfahrzeuge. Dies ist beispielsweise vorteilhaft, wenn die Transportkolonnen, Transportaufträge und Transportfahrzeuge zwischen verschiedenen Transportdiensten geplant und/oder disponiert werden.

In einer alternativen beispielhaften Ausführungsform der Erfindung umfasst das Erhalten der Transportkolonneninformationen:
- Empfangen der Transportkolonneninformationen von einer entfernten Vorrichtung.

Zum Beispiel werden die Transportkolonneninformationen von der entfernten Vorrichtung (z.B. einer Transportdienstvorrichtung) bestimmt. Das Bestimmen der Transportkolonneninformationen durch die entfernte Vorrichtung kann beispielsweise durch die Steuervorrichtung und/oder das Transportfahrzeug bewirkt werden, indem eine Anfrage zum Bestimmen der Transportkolonneninformationen an die entfernte Vorrichtung gesendet wird, um die entfernte Vorrichtung zu veranlassen, die Transportkolonneninformationen zu bestimmen. Anschließend können entsprechende Transportkolonneninformationen von der entfernten Vorrichtung empfangen werden.

Optional können ferner, wie oben offenbart, Transportrouteninformationen, die die Transportroute für das Transportfahrzeug repräsentieren, von der entfernten Vorrichtung empfangen werden.

Das Empfangen der Transportkolonneninformationen und/oder der Transportrouteninformationen kann beispielsweise durch Kommunikationsmittel der Steuervorrichtung und/oder des Transportfahrzeugs erfolgen.

Diese Ausführungsform ermöglicht eine zentrale Koordinierung von Transportkolonnen, Transportaufträgen und Transportrouten für Transportfahrzeuge. Dies ist beispielsweise vorteilhaft, wenn die Transportkolonnen, Transportaufträge und Transportfahrzeuge von einem Transportdienst geplant und/oder disponiert werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer Ausführungsform einer Steuervorrichtung gemäß einem beispielhaften Aspekt der Erfindung;
- Fig. 2: eine schematische Darstellung einer Ausführungsform eines Systems gemäß einem beispielhaften Aspekt der Erfindung;
- Fig. 3: ein Flussdiagramm eines Ausführungsbeispiels eines Verfahrens gemäß einem beispielhaften Aspekt der Erfindung; und
- Fig. 4: beispielhafte Ausführungsformen von Speichermedien.

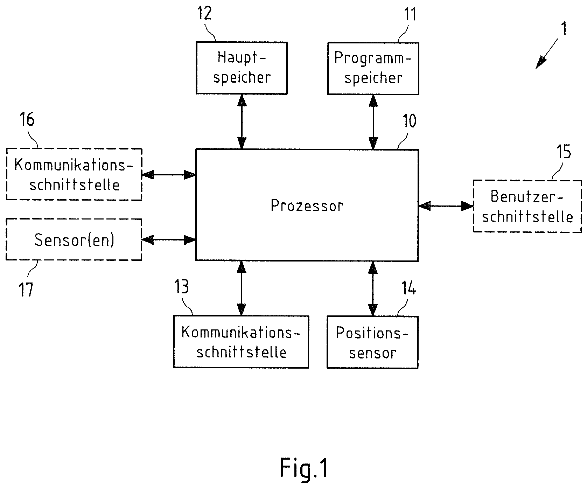

Fig. 1 ist eine schematische Darstellung einer beispielhaften Ausführungsform einer Steuervorrichtung 1 gemäß einem beispielhaften Aspekt der Erfindung.

Die Steuervorrichtung 1 umfasst beispielhaft einen Prozessor 10 und verbunden mit dem Prozessor 10 einen ersten Speicher als Programm- und Datenspeicher 11, einen zweiten Speicher als Hauptspeicher 12, eine erste drahtlose Kommunikationsschnittstelle 13, einen Positionssensor 14 und eine optionale Benutzerschnittstelle 15. Ferner kann die Vorrichtung 1 optional eine zweite drahtlose Kommunikationsschnittstelle 16 und/oder einen oder mehrere Sensoren 17 fassen.

Unter einem Prozessor soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass die Vorrichtung 1 auch mehrere Prozessoren 10 umfassen kann.

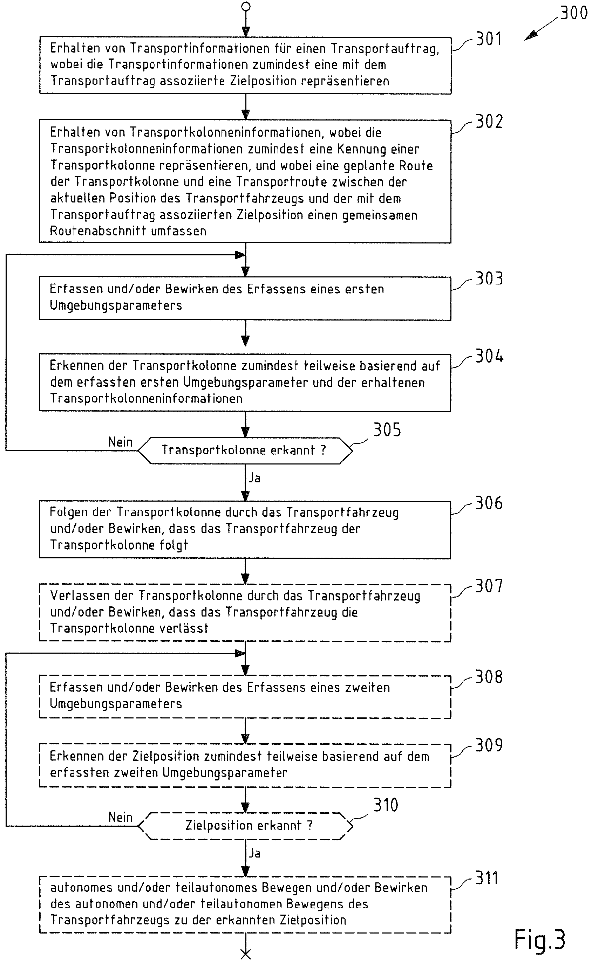

Prozessor 10 führt Programmanweisungen aus, die in Programmspeicher 11 gespeichert sind, und speichert beispielsweise Zwischenergebnisse oder ähnliches in Hauptspeicher 12. Der Programmspeicher 11 enthält beispielsweise Programmanweisungen eines offenbarten Computerprogramms, das Programmanweisungen umfasst, die den Prozessor 10 veranlassen, ein offenbartes Verfahren (z.B. das Verfahren gemäß dem in Fig. 3 dargestellten Flussdiagram 300) auszuführen und/oder zu steuern, wenn der Prozessor 10 diese in Programmspeicher 11 gespeicherten Programmanweisungen ausführt. Außerdem können in Programmspeicher 11 beispielsweise eine Transportkolonnendatenbank und/oder Karten- und/oder Navigationsdaten gespeichert sein.

Programmspeicher 11 enthält ferner beispielsweise das Betriebssystem der Steuervorrichtung 1, das beim Starten der Steuerungsvorrichtung 1 zumindest teilweise in Hauptspeicher 12 geladen und vom Prozessor 10 ausgeführt wird. Insbesondere wird beim Starten der Steuervorrichtung 1 zumindest ein Teil des Kerns des Betriebssystems in den Hauptspeicher 12 geladen und von Prozessor 10 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Steuerungsvorrichtung zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 12 und Programmspeicher 11 können auch als ein Speicher ausgebildet sein. Alternativ können Hauptspeicher 12 und/oder Programmspeicher 11 jeweils durch mehrere Speicher gebildet werden. Ferner können Hauptspeicher 12 und/oder Programmspeicher 11 auch Teil des Prozessors 10 sein.

Prozessor 10 steuert die erste drahtlose Kommunikationsschnittstelle 13, welche beispielsweise als Bluetooth-Schnittstelle ausgebildet ist.

Eine drahtlose Kommunikationsschnittstelle kann beispielsweise Informationen (über einen drahtlosen Kommunikationspfad) empfangen und an den Prozessor weiterleiten und/oder Informationen von dem Prozessor empfangen und (über einen drahtlosen Kommunikationspfad) senden. Ein Beispiel für eine drahtlose Kommunikationsschnittstelle ist ein drahtloser Netzwerkadapter. Zum Beispiel umfasst eine drahtlose Kommunikationsschnittstelle nebst einer Antenne zumindest eine Senderschaltung und eine Empfängerschaltung oder eine Sendeempfängerschaltung.

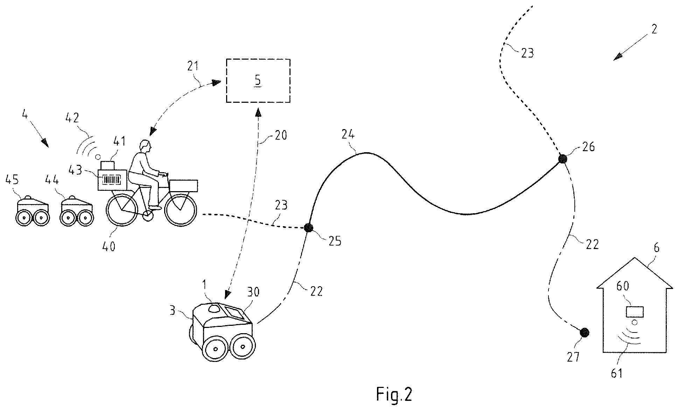

Die drahtlose Kommunikationsschnittstelle 13 ist beispielsweise eingerichtet zum Empfangen eines Funksignals (z.B. eines Bluetooth-Signals der in Fig. 2 dargestellten Bluetooth-Beacons 41 und 61).

Positionssensor 14 ist beispielsweise eingerichtet zum Erfassen einer Position der Steuervorrichtung 1. Zum Beispiel ist Positionssensor 14 ein Positionssensor eines Satelliten gestützten Positionierungssystems wie dem GPS-System, dem GLONASS-System, dem Galileo-System und/oder dem Beidou-System. Auch Positionssensor 14 wird durch Prozessor 10 gesteuert.

Ferner steuert Prozessor 10 die optionale Benutzerschnittstelle 15, welche eingerichtet ist zum Ausgeben von Informationen an einen Benutzer und/oder zum Erfassen von Eingaben eines Benutzers. Wie oben offenbart, kann eine Benutzerschnittstelle eine Tastatur, eine Maus, ein Bildschirm, ein berührungsempfindlicher Bildschirm, ein Lautsprecher, ein Mikrofon, usw. sein.

Die optionale zweite drahtlose Netzwerkschnittstelle 16 wird ebenfalls durch Prozessor 10 gesteuert und ist beispielsweise als GSM-, UMTS- und/oder LTE-Schnittstelle ausgebildet. Sie ist beispielsweise eingerichtet zur Kommunikation mit einem Server (z.B. dem in Fig. 3 dargestellten Server 5 eines Transportdienstes) über ein drahtloses Kommunikationsnetzwerk (z.B. ein GSM-, UMTS- und/oder LTE-Netzwerk).

Darüber hinaus steuert Prozessor 10 einen optionalen Sensor 17, beispielsweise einen Bildsensor 17. Ein Beispiel für einen Bildsensor 17 ist APS-Sensor oder ein CCD-Sensor. Er kann beispielsweise zum Erfassen eines Bilds einer Umgebung der Steuervorrichtung 1 eingerichtet sein.

Es versteht sich, dass die Steuervorrichtung 1 auch mehrere optionale Sensoren 17 umfassen kann.

Die Komponenten 10 bis 17 der Steuervorrichtung 1 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Steuervorrichtung 1 neben den Komponenten 10 bis 17 weitere Komponenten (z.B. eine Fahrzeugschnittstelle) umfassen kann. Zum Beispiel können ein Laserscanner, ein Ultraschallsensor und/oder ein Radarsensor zur Überwachung und/oder Steuerung der Fahrfunktionen des Transportfahrzeugs eingebunden sein.

Fig. 2 zeigt eine schematische Darstellung einer Ausfiihrungsform eines Systems 2 gemäß einem beispielhaften Aspekt der Erfindung.

In Fig. 2 ist die im Zusammenhang mit Fig. 1 offenbarte Steuervorrichtung 1 beispielhaft als Teil eines unbemannten Landfahrzeugs 3 dargestellt. Das unbemannte Landfahrzeug 3 ist ein autonomes und/oder teilautonomes Transportfahrzeug und weist ein mit einer Tür verschlossenes Aufnahmefach 30 auf. In dem Aufnahmefach 30 kann das unbemannte Landfahrzeug 3 eine Sendung (oder ggfs. mehrere Sendungen) transportieren. Es versteht sich, dass das Transportfahrzeug 3 auch mehrere Aufnahmefächer umfassen könnte. Wie oben offenbart, soll ein Fahrzeug beispielsweise als sich zumindest teilweise autonom bewegend verstanden werden, wenn das Fahrzeug eingerichtet ist, sich zumindest auf einem Teil einer vorgegebenen Route selbsttätig (z.B. ohne Einfluss eines Fahrzeugführers) zu bewegen (z.B. fahren) und entlang der vorgegebenen Route zu navigieren. Ein sich autonom bewegendes Fahrzeug fährt beispielsweise auf der gesamten Route selbsttätig (z.B. ohne Einfluss eines Fahrzeugführers) und navigiert selbsttätig entlang der gesamten Route. Ferner ist das unbemannte Landfahrzeug 3 eingerichtet, einem vorausfahrenden Fahrzeug autonom zu folgen. Zum Beispiel umfasst das Transportfahrzeug 3 geeignete Überwachungsmittel zum Überwachen der Umgebung des Bereichs vor und/oder neben dem Transportfahrzeug, um Hindernisse erkennen und selbsttätig umfahren zu können wenn sich das Transportfahrzeug selbsttätig bewegt, und/oder um einem vorausfahrenden Fahrzeug folgen zu können. Beispiele für solche Überwachungsmittel sind ein Laserscanner, ein Ultraschallscanner, eine Kamera und/oder ein Radarsystem.

Neben dem unbemannten Landfahrzeug 3 mit der Steuervorrichtung 1 umfasst System 2 ferner eine Transportkolonne 4 mit einer Führungseinheit 40, die in Fig. 2 beispielhaft als Lastenfahrrad 40 dargestellt ist. Es versteht sich, dass die Führungseinheit auch ein anderes Landfahrzug (z.B. ein Dreirad, ein Pedelec, ein Personenkraftwagen, ein Lastkraftwagen, ein Schienenfahrzeug wie eine Lokomotive, ein unbemanntes Landfahrzeug wie ein Roboter), ein Wasserfahrzeug (z.B. ein Schiff wie ein Frachtschiff, ein Uboot und/oder ein unbemanntes Wasserfahrzeug) und/oder ein Luftfahrzeug (z.B. ein Flugzeug, ein Hubschrauber, ein unbemanntes Luftfahrzeug wie eine Drohne) sein kann. Alternativ kann die Führungseinheit aber auch ein Mensch (z.B. ein Postbote und/oder ein Zusteller) und/oder ein Tier sein.

Das Lastenfahrrad 40 weist einen Funksender 41 auf, der eingerichtet ist, ein Funksignal 42, das eine Funksignalkennung enthält und/oder repräsentiert, auszusenden. Ein Beispiel für einen solchen Funksender ist ein Bluetooth-Beacon und/oder ein WLAN-Zugangspunkt. Im Folgenden wird beispielhaft davon ausgegangen, dass der Funksender 41 ein Bluetooth-Beacon 41 ist. Dementsprechend ist das Funksignal 42 ein Bluetooth-Signal 42 (z.B. ein sogenanntes Advertising-Signal). Das Bluetooth-Signal 42 enthält und/oder repräsentiert beispielsweise eine Funksignalkennung in Form einer Kennung des Bluetooth-Beacons 41 wie einer MAC-Adresse des Bluetooth-Beacons 41. Die Kennung des Bluetooth-Beacons 41 ist zumindest im System 2 eindeutig und ermöglicht somit eine eindeutige Identifizierung des Lastenfahrrads 40 (z.B. durch eine entsprechende Verknüpfung des Lastenfahrrads 40 mit dem Bluetooth-Beacon 41 und/oder der Kennung des Bluetooth-Beacons 41). Das Funksignal 42 wird beispielsweise automatisch und/oder kontinuierlich (z.B. in regelmäßigen und/oder unregelmäßigen Zeitabständen) durch das Bluetooth-Beacon 41 ausgesendet.

Alternativ oder zusätzlich kann das Lastenfahrrad 40 auch eine optische Kennung 43 aufweisen.

Neben dem Lastenfahrrad 40 als Führungseinheit kann die Transportkolonne 4 dem Lastenfahrrad 40 folgende Fahrzeuge 44 und 45 umfassen. Neben der Funksignalkennung kann das Funksignal 42 beispielsweise Folgeinformationen (wie Fahrtgeschwindigkeitsinformationen und/oder Fahrtrichtungsinformationen) enthalten und/oder repräsentieren, die die folgenden Fahrzeuge 44 und 45 zum autonomen und/oder teilautonomen Folgen der Transportkolonne 4 nutzen können. Ferner können die folgenden Fahrzeuge optional Informationen an das führende Fahrzeug senden. Diese Informationen können beispielsweise den Anschluss an die Transportkolonne, das Verlassen der Transportkolonne und/oder Störungen in der Transportkolonne betreffen. Diese Informationen können die Bewegung (z.B. Fahrtrichtung und/oder Fahrtgeschwindigkeit) des Führungsfahrzeugs beeinflussen.

Es versteht sich, dass die Transportkolonne 4 weitere Fahrzeuge umfassen kann und dass das System 2 weitere Transportkolonnen umfassen kann.

Außerdem ist in Fig. 2 eine optionale Transportdienstvorrichtung eines Transportdienstes als Server 5 dargestellt. Ein Transportdienst ist beispielsweise ein Zustelldienst, ein Postdienst, ein Paketdienst und/oder ein Kurierdienst.

Der Server 5 plant und/oder disponiert zum Beispiel Transportaufträge des Transportdienstes, Routen für Transportkolonnen des Transportdienstes und/oder Transportrouten für Transportfahrzeuge des Transportdiensts. Zu diesem Zweck kann der Server 5 auch eine Vielzahl von Führungseinheiten wie dem Lastenfahrrad 40 und/oder eine Vielzahl von unbemannten Transportfahrzeugen wie das Transportfahrzeug 3 einsetzen und/oder steuern.

In Fig. 2 sind optionale Kommunikationsverbindungen 20 und 21 dargestellt. Über Kommunikationsverbindung 20 kann Server 5 beispielsweise mit dem unbemannten Transportfahrzeug 3 kommunizieren; und über Kommunikationsverbindung 21 kann Server 5 beispielsweise mit Lastenfahrrad 40 und/oder einem mobilen Benutzerendgerät (z.B. einem Smartphone) des Fahrers des Lastenfahrrads 40 kommunizieren. Die Kommunikationsverbindungen 20 und 21 sind zum Beispiel drahtlose Kommunikationsverbindungen über ein Mobilfunknetzwerk (z.B. ein GSM-, UMTS- und/oder LTE-Netzwerk) oder schließen eine oder mehrere drahtlose Kommunikationsverbindungen über ein solches Mobilfunknetzwerk ein.

Die Ausführungsform des Systems 2 mit dem Server 5 ermöglicht eine zentrale Planung und Disponierung. Diese Ausführungsform ist beispielsweise vorteilhaft, wenn Transportaufträge, Routen für Transportkolonnen und/oder Transportrouten für Transportfahrzeuge des gleichen Transportdienstes geplant und disponiert werden sollen.

Alternativ sind jedoch auch Ausführungsformen des Systems 2 ohne eine solche Transportdienstvorrichtung möglich. In diesen Ausführungsformen werden die Transportaufträge, Routen für Transportkolonnen und/oder Transportrouten für Transportfahrzeuge dezentral disponiert und/oder geplant. Diese ausführungsformen sind beispielsweise vorteilhaft, wenn Transportaufträge, Routen für Transportkolonnen und/oder Transportrouten für Transportfahrzeuge für verschiedene Transportdienste geplant und disponiert und untereinander koordiniert werden sollen. Beispielsweise können in solchen Ausführungsformen Transportaufträge und/oder freie Plätze in Transportkolonnen über eine oder verschiedene Netzwerkplattformen (z.B. eine oder verschiedene durch einen oder mehrere Server (z.B. mehrere Server, die eine Cloud bilden) bereitgestellte Netzwerkplattformen) angeboten werden.

Im Folgenden wird beispielhaft von der in Fig. 2 dargestellten Ausführungsform des Systems 2 mit dem Server 5 ausgegangen.

In Fig. 2 sind schematisch eine Transportroute 22 für das unbemannte Transportfahrzeug 3 und eine geplante Route 23 der Transportkolonne 4 dargestellt. Die Transportroute 22 für das Transportfahrzeug 3 verläuft zwischen der aktuellen Position des Transportfahrzeugs 3 und einer mit einem Transportauftrag des Transportfahrzeugs 3 assoziierten Zielposition 27. Die Transportroute 22 für das Transportfahrzeug 3 und die geplante Route 23 der Transportkolonne 4 weisen einen gemeinsamen Routenabschnitt 24 auf. Dieser gemeinsamen Routenabschnitt 24 beginnt an der Position 25 und endet an der Position 26.

Ferner ist in Fig. 2 ein Gebäude 6 an der Zielposition 27 dargestellt, an dem Funksender 61 angeordnet ist. Im Folgenden wird beispielhaft davon ausgegangen, dass der Funksender 61 ein Bluetooth-Beacon 61 ist, das eingerichtet ist, ein Bluetooth-Signal 61 (z.B. ein sogenanntes Advertising-Signal) auszusenden. Das Bluetooth-Signal 61 enthält und/oder repräsentiert beispielsweise eine Funksignalkennung in Form einer Kennung des Bluetooth-Beacons 61 wie einer MAC-Adresse des Bluetooth-Beacons 61. Die Kennung des Bluetooth-Beacons 61 ist zumindest im System 2 eindeutig und ermöglicht somit eine eindeutige Identifizierung der Zielposition 27 (z.B. durch eine entsprechende Verknüpfung der Zielposition 27 mit dem Bluetooth-Beacon 61 und/oder der Kennung des Bluetooth-Beacons 61). Das Bluetooth-Signal 61 wird beispielsweise automatisch und/oder kontinuierlich (z.B. in regelmäßigen und/oder unregelmäßigen Zeitabständen) durch das Bluetooth-Beacon 61 ausgesendet.

Fig. 3 zeigt ein Flussdiagramm mit Schritten einer beispielhaften Ausführungsform eines Verfahrens gemäß einem beispielhaften Aspekt der Erfindung. Im Folgenden wird beispielhaft angenommen, dass die Schritte 301 bis 311 des Flussdiagramms 300 durch die Steuervorrichtung 1, die Teil des unbemannten Transportfahrzeugs 3 in System 2 (vgl. Fig. 2) ist, ausgeführt werden.

In einem Schritt 301 werden Transportinformationen für einen Transportauftrag erhalten, wobei die Transportinformationen zumindest eine mit dem Transportauftrag assoziierte Zielposition repräsentieren.

Die Transportinformationen werden in Schritt 301 beispielsweise von dem Server 5 über die Kommunikationsverbindung 20 durch die Kommunikationsschnittstelle 16 der Steuervorrichtung 1 empfangen (d.h. erhalten).

Mit dem Transportauftrag wird das Transportfahrzeug 3 beispielsweise beauftragt, eine Sendung (z.B. in dem Aufnahmefach 30) von einer Startposition zu einer Zielposition zu transportieren. Unter einer mit dem Transportauftrag assoziierten Zielposition soll beispielsweise eine Position verstanden werden, an der eine im Rahmen des Transportauftrag zu transportierenden Sendung abgeliefert werden soll; und unter einer mit dem Transportauftrag assoziierten Startposition soll beispielsweise eine Position verstanden werden, an der eine im Rahmen des Transportauftrag zu transportierenden Sendung abgeholt werden soll. Die Startposition entspricht beispielsweise der Postanschrift des Absenders der Sendung und die Zielposition entspricht beispielsweise der Postanschrift des Empfängers der Sendung. Ferner kann der Transportauftrag auch einen Sendungsabholzeitpunkt und/oder einen Sendungsabholzeitraum und/oder einen Sendungsablieferungszeitpunkt und/oder einen Sendungsablieferungszeitraum vorgeben. Dabei kann der Sendungsabholzeitpunkt beispielsweise den exakten Zeitpunkt vorgegeben, an dem die Sendung an der Startposition durch das Transportfahrzeug abgeholt werden soll; und der Sendungsabholzeitraum ist beispielsweise durch den frühsten und den spätesten Zeitpunkt, zwischen denen die Sendung an der Startposition durch das Transportfahrzeug abgeholt werden soll, vorgegeben. Dementsprechend gibt der Sendungsablieferungszeitpunkt beispielsweise den exakten Zeitpunkt vor, an dem die Sendung an der Zielposition durch das Transportfahrzeug abgeliefert werden soll; und der Sendungsablieferungszeitraum ist beispielsweise durch den frühsten und den spätesten Zeitpunkt, zwischen denen die Sendung an der Zielposition durch das Transportfahrzeug abgeliefert werden soll, vorgegeben. Zum Beispiel wird die zu transportierende Sendung an der Startposition durch den Absender in das Aufnahmefach 30 des Transportfahrzeugs 3 gelegt und an der Zielposition durch den Empfänger aus dem Aufnahmefach 30 des Transportfahrzeugs 3 herausgenommen. Es versteht sich, dass alternativ auch ein automatisches Entladen und/oder Beladen des Transportfahrzeugs 3 mit der Sendung vorgesehen sein kann. Auch kann das Transportfahrzeug 3 mehrere Sendungen gleichzeitig transportieren.

Die mit dem Transportauftrag assoziierte Zielposition ist beispielsweise die Zielposition 27. Beispielsweise enthalten die Transportinformationen eine Repräsentation der Zielposition in Form einer Adress-, Positions- und/oder Koordinatenangabe. Ferner können die Transportinformationen weitere mit dem Transportauftrag assoziierte Informationen wie beispielsweise eine Adress-, Positions- und/oder Koordinatenangabe der mit dem Transportauftrag assoziierten Startposition und/oder mit der im Rahmen des Transportauftrag zu transportierenden Sendung assoziierte Sendungsinformationen (z.B. eine Kennung der Sendung, Informationen zum Gewicht und/oder zu den Abmessungen der Sendung, Informationen zum Absender und/oder Empfänger der Sendung) enthalten und/oder repräsentieren.

In einem Schritt 302 werden Transportkolonneninformationen erhalten, wobei die Transportkolonneninformationen zumindest eine Kennung einer Transportkolonne repräsentieren. Dabei umfassen eine geplante Route der Transportkolonne und eine Transportroute zwischen der aktuellen Position des Transportfahrzeugs und der mit dem Transportauftrag assoziierten Zielposition einen gemeinsamen Routenabschnitt.

Die Transportroute zwischen der aktuellen Position des Transportfahrzeugs 3 und der mit dem Transportauftrag assoziierten Zielposition beschreibt beispielsweise einen möglichen Weg, entlang dem sich das Transportfahrzeug 3 von der aktuellen Position des Transportfahrzeugs 3 zu der mit dem Transportauftrag assoziierten Zielposition bewegen kann. Es versteht sich, dass es eine Vielzahl von möglichen Transportrouten zwischen der aktuellen Position des Transportfahrzeugs 3 und der mit dem Transportauftrag assoziierten Zielposition geben kann, die verschiedene mögliche Wege, entlang derer sich das Transportfahrzeug 3 von der aktuellen Position des Transportfahrzeugs 3 zu der mit dem Transportauftrag assoziierten Zielposition bewegen kann, beschreiben.

Die Transportroute für das Transportfahrzeug 3 wird beispielsweise bestimmt, beispielsweise indem sie aus einer Vielzahl von möglichen Transportrouten ausgewählt wird. Dabei kann die Vielzahl von möglichen Transportrouten zumindest teilweise basierend auf Navigations- und/oder Kartendaten sowie der Start- und Zielposition bestimmt werden. Anschließend wird die Transportroute für das Transportfahrzeug 3 beispielsweise aus einer Vielzahl möglicher Transportrouten ausgewählt werden. Die Auswahl kann beispielsweise anhand einer oder mehrere vorgegebener Routenkriterien (z.B. schnellste Route, kürzeste Route und/oder ein oder mehreren weiteren Zwischenzielpositionen) erfolgen. Ferner kann bei der Auswahl auch berücksichtigt werden, ob die Transportroute (insbesondere über weitere Streckenabschnitte der Transportroute und/oder über Streckenabschnitte der Transportroute in Bereichen, in denen es häufig zu komplexen Umgebungssituationen oder Kapazitätsengpässen kommt) gemeinsame Routenabschnitte mit geplanten Routen einer oder mehrerer Transportkolonnen aufweist. Als Ergebnis des Bestimmens der Transportroute werden beispielsweise Transportrouteninformationen, die die Transportroute für das Transportfahrzeug 3 repräsentieren, erhalten. Wie oben offenbart, kann eine Route als Wegbeschreibung eines Wegs zwischen mehreren Positionen verstanden und beispielsweise durch eine geordnete Liste von Wegpunktangaben repräsentiert werden, wobei jede Wegpunktangabe eine Position eines Wegpunkts des Wegs repräsentiert, an der sich die Richtung des Wegs ändert. Es kann beispielsweise vorgesehen sein, dass die Transportroute für das Transportfahrzeug 3 durch die Steuervorrichtung 1 bestimmt wird. Alternativ kann die Transportroute beispielsweise durch den Server 5 bestimmt und anschließend entsprechende Transportrouteninformationen von dem Server 5 über die Kommunikationsverbindung 20 an die Steuervorrichtung 1 kommuniziert werden. Zum Beispiel können die Transportrouteninformationen gemeinsam mit den Transportinformationen in Schritt 301 und/oder den Transportkolonneninformationen in Schritt 302 durch die Kommunikationsschnittstelle 16 der Steuervorrichtung 1 empfangen (d.h. erhalten) werden.

Wie oben offenbart, können die Transportkolonneninformationen zumindest teilweise basierend auf der Transportroute für das Transportfahrzeug 3 bestimmt werden. Zum Beispiel werden die Transportkolonneninformationen als Ergebnis des Bestimmens der Transportkolonneninformationen erhalten. Zum Bestimmen der Transportkolonneninformationen kann beispielsweise die Transportroute für das Transportfahrzeug mit den für eine oder mehrere Transportkolonnen geplanten Routen verglichen werden. Zum Beispiel repräsentieren die Transportkolonneninformationen die Kennung(en) der Transportkolonnen, für die der Vergleich ergibt, dass deren geplante Routen jeweils einen gemeinsamen Routenabschnitt mit der Transportroute für das Transportfahrzeug 3 aufweisen.

Es kann vorgesehen sein, dass die Transportkolonneninformationen durch die Steuervorrichtung 1 bestimmt werden. Hierfür sind in dem Programmspeicher 11 beispielsweise Routeninformationen, die die geplanten Routen verschiedener Transportkolonnen repräsentieren, in Form einer Datenbank (z.B. einer Transportkolonnendatenbank) gespeichert. Alternativ kann vorgesehen sein, dass die Transportkolonneninformationen durch den Server 5 bestimmt und anschließend von dem Server 5 über die Kommunikationsverbindung 20 an die Steuervorrichtung 1 kommuniziert werden.

Im Folgenden wird beispielhaft davon ausgegangen, dass die Transportkolonneninformationen in Schritt 302 von dem Server 5 über die Kommunikationsverbindung 20 durch die Kommunikationsschnittstelle 16 der Steuervorrichtung 1 empfangen (d.h. erhalten) werden und dass die Transportkolonneninformationen die Funksignalkennung der Transportkolonne 4, die in dem durch den Funksender 41 des Lastenrads 40 ausgesendeten Funksignal 42 enthalten ist und/oder dadurch repräsentiert wird, repräsentieren. Wie oben zu Fig. 2 beschrieben, weisen die Transportroute 22 für das Transportfahrzeug 3 und die geplante Route 23 der Transportkolonne 4 einen gemeinsamen Routenabschnitt 24 auf.

Es versteht sich, dass die Schritte 301 und 302 auch in einem Schritt zusammengefasst werden können, so dass die Transportinformationen und die Transportkolonneninformationen beispielsweise in einem Schritt und/oder gleichzeitig erhalten werden (z.B. in einem Schritt und/oder gleichzeitig empfangen werden).

In einem Schritt 303 wird ein erster Umgebungsparameter erfasst und/oder das Erfassen des ersten Umgebungsparameters bewirkt. Anschließend wird in Schritt 304 zumindest teilweise basierend auf den in Schritt 303 erfassten ersten Umgebungsparameter und den in Schritt 302 erhaltenen Transportkolonneninformationen die Transportkolonne 4 erkannt. Zum Beispiel wird die Transportkolonne 4 in Schritt 304 erkannt, wenn der in Schritt 303 erfasste erste Umgebungsparameter eine Repräsentation der Kennung der Transportkolonne 4 enthält.

Wie oben beschrieben wird vorliegend beispielhaft davon ausgegangen, dass die in Schritt 302 erhaltenen Transportkolonneninformationen die Funksignalkennung der Transportkolonne 4, die in dem durch den Bluetooth-Beacon 41 des Lastenrads 40 ausgesendeten Bluetooth-Signals 42 enthalten ist und/oder dadurch repräsentiert wird, repräsentieren. Dementsprechend wird der erste Umgebungsparameter in Schritt 303 beispielsweise durch Empfangen eines Bluetooth-Signals durch die Kommunikationsschnittstelle 13 erfasst. Zum Beispiel ist der erfasste erste Umgebungsparameter eine Repräsentation einer in einem empfangenen Bluetooth-Signal enthaltenen und/oder einer durch ein empfangenes Bluetooth-Signal repräsentierten Funksignalkennung.

Zum Beispiel scannt die Kommunikationsschnittstelle 13 kontinuierlich nach Bluetooth-Signalen (z.B. in regelmäßigen oder unregelmäßigen Zeitabständen), um den ersten Umgebungsparameter zu erfassen. Alternativ scannt die Kommunikationsschnittstelle 13 beispielsweise zumindest dann nach Bluetooth-Signalen, wenn sich das Transportfahrzeug an und/oder in der Nähe der Position 25 (d.h. dem Beginns des gemeinsamen Routenabschnitts 24) befindet. Hierzu kann die Steuervorrichtung 1 die Position des Transportfahrzeugs beispielsweise mit Hilfe des Positionssensors 14 erfassen und den Abstand von der Position 25 bestimmen. Zum Beispiel befindet sich das Transportfahrzeug 3 in der Nähe der Position 25, wenn sein Abstand zu der Position 25 weniger als 100 m, vorzugsweise weniger als 25 m, besonders vorzugsweise weniger als 10 m beträgt.

Zum Beispiel kann die in einem in Schritt 303 empfangenen Bluetooth-Signal enthaltene und/oder dadurch repräsentierte Funksignalkennung, aus dem Bluetooth-Signal extrahiert und anschließend in Schritt 304 mit der Funksignalkennung der Transportkolonne 4 verglichen werden, um zu bestimmen, ob die Funksignalkennung der Transportkolonne 4 darin enthalten und/oder dadurch repräsentiert wird. Wenn bestimmt wird, dass die Funksignalkennung der Transportkolonne 4 darin enthalten und/oder dadurch repräsentiert wird, wird die Transportkolonne 4 in Schritt 304 beispielsweise erkannt.

In Schritt 305 wird beispielsweise geprüft, ob die Transportkolonne 4 in Schritt 304 erkannt wurde. Wenn die Transportkolonne 4 nicht erkannt wurde, wird beispielsweise Schritt 303 wiederholt. Andernfalls wird das Flussdiagramm 300 beispielsweise mit einem Schritt 306 fortgesetzt.

In Schritt 306 folgt das Transportfahrzeug der (in Schritt 304 erkannten) Transportkolonnen 4 und/oder es wird bewirkt, dass das Transportfahrzeug 3 der Transportkolonne 4 folgt. Zum Beispiel steuert die Steuervorrichtung 1 das Transportfahrzeug 3 in Schritt 306 derart an, dass das Transportfahrzeug 3 veranlasst wird, der Transportkolonne 4 zu folgen.

In einem optionalen Schritt 307 verlässt das Transportfahrzeug 3 die Transportkolonne 4 und/oder es wird bewirkt, dass das Transportfahrzeug 3 die Transportkolonne 4 verlässt. Zum Beispiel steuert die Steuervorrichtung 1 das Transportfahrzeug 3 in Schritt 307 derart an, dass das Transportfahrzeug 3 veranlasst wird, der Transportkolonne 4 zu verlassen.

Zum Beispiel kann vorgesehen sein, dass die Steuervorrichtung 1 das Transportfahrzeug 3 in Schritt 307 derart ansteuert, dass das Transportfahrzeug 3 veranlasst wird, der Transportkolonne 4 zu verlassen, wenn sich die Transportkolonne an und/oder in der Nähe der Position 26 (d.h. dem Endes des gemeinsamen Routenabschnitts 24) befindet. Hierzu kann die Steuervorrichtung 1 die Position des Transportfahrzeugs 3 und somit der Transportkolonne 4 beispielsweise mit Hilfe des Positionssensors 14 erfassen und den Abstand von der Position 26 bestimmen. Zum Beispiel befindet sich das Transportfahrzeug 3 in der Nähe der Position 26, wenn sein Abstand zu der Position 26 weniger als 100 m, vorzugsweise weniger als 25 m, besonders vorzugsweise weniger als 10 m beträgt.

Anschließend kann sich das Transportfahrzeug 3 autonom und/oder teilautonom entlang der Transportroute 22 zu der Zielposition 27 bewegen. Hierzu kann in einem optionalen Schritt 308 ein zweiter Umgebungsparameter erfasst und/oder das Erfassen des zweiten Umgebungsparameters bewirkt werden. Anschließend wird die Zielposition 27 in einem optionalen Schritt 309 zumindest teilweise basierend auf dem erfassten zweiten Umgebungsparameter 309 erkannt.

Wie oben beschrieben, ist in Fig. 2 ein Gebäude 6 an der Zielposition 27 dargestellt, an dem ein Bluetooth-Beacon 61 angeordnet ist, das eingerichtet ist, ein Bluetooth-Signal 61 (z.B. ein sogenanntes Advertising-Signal) auszusenden. Das Bluetooth-Signal 61 enthält und/oder repräsentiert beispielsweise eine Funksignalkennung in Form einer Kennung des Bluetooth-Beacons 61 wie einer MAC-Adresse des Bluetooth-Beacons 61. Die Kennung des Bluetooth-Beacons 61 ist zumindest im System 2 eindeutig und ermöglicht somit eine eindeutige Identifizierung der Zielposition 27 (z.B. durch eine entsprechende Verknüpfung der Zielposition 27 mit dem Bluetooth-Beacon 61 und/oder der Kennung des Bluetooth-Beacons 61). Dementsprechend wird der zweite Umgebungsparameter in Schritt 308 beispielsweise durch Empfangen eines Funksignals durch die Kommunikationsschnittstelle 13 erfasst. Zum Beispiel ist der erfasste zweite Umgebungsparameter eine Repräsentation einer in einem empfangenen Funksignal enthaltenen und/oder einer durch ein empfangenes Funksignal repräsentierten Funksignalkennung.

Zum Beispiel scannt die Kommunikationsschnittstelle 13 kontinuierlich nach Bluetooth-Signalen (z.B. in regelmäßigen oder unregelmäßigen Zeitabständen), um den ersten und/oder zweiten Umgebungsparameter zu erfassen. Alternativ scannt die Kommunikationsschnittstelle 13 beispielsweise zumindest dann nach Funksignalen, wenn sich das Transportfahrzeug an und/oder in der Nähe der Position 25 (d.h. dem Beginns des gemeinsamen Routenabschnitts 24) und/oder der Zielposition 27 befindet. Hierzu kann die Steuervorrichtung 1 die Position des Transportfahrzeugs beispielsweise mit Hilfe des Positionssensors 14 erfassen und den Abstand von der Position 25 und/oder 27 bestimmen. Zum Beispiel befindet sich das Transportfahrzeug 3 in der Nähe der Position 25 und/oder 27, wenn sein Abstand zu der Position 25 oder 27 weniger als 100 m, vorzugsweise weniger als 25 m, besonders vorzugsweise weniger als 10 m beträgt.

Zum Beispiel kann die in einem in Schritt 308 empfangenen Bluetooth-Signal enthaltene und/oder dadurch repräsentierte Funksignalkennung, aus dem Bluetooth-Signal extrahiert und anschließend in Schritt 304 mit der Funksignalkennung der Zielposition 27 verglichen werden, um zu bestimmen, ob die Funksignalkennung der Zielposition 27 darin enthalten und/oder dadurch repräsentiert wird. Wenn bestimmt wird, dass die Funksignalkennung der Zielposition 27 darin enthalten und/oder dadurch repräsentiert wird, wird die Zielposition in Schritt 309 beispielsweise erkannt.

Ferner kann beispielsweise die Empfangsrichtung und/oder die Ausbreitungsrichtung des in Schritt 308 empfangenen Bluetooth-Signals bestimmt werden. Als Ergebnis des Bestimmens wird beispielsweise eine Richtungsinformation erhalten, die die Empfangsrichtung und/oder die Ausbreitungsrichtung des Bluetooth-Signals repräsentiert. Wie oben offenbart, kann, wenn sich das Bluetooth-Beacon 60 an der Zielposition befindet, basierend auf dieser Richtungsinformation beispielsweise eine Fahrtrichtung des Transportfahrzeugs 3 in Richtung der Zielposition 27 bestimmt werden, zum Beispiel um ein autonomes und/oder teilautonomes Bewegen des Transportfahrzeugs in Richtung der Zielposition 27 zu ermöglichen. Dadurch kann eine genaue Navigation des Transportfahrzeugs 3 zu der Zielposition 27 auch dann ermöglicht werden, wenn nur ein ungenaues Erfassen einer Position des Transportfahrzeugs durch den Positionssensor 14 möglich ist.

In einem optionalen Schritt 310 wird beispielsweise geprüft, ob die Zielposition 27 in Schritt 309 erkannt wurde. Wenn die Zielposition 27 nicht erkannt wurde, wird beispielsweise Schritt 308 wiederholt. Andernfalls wird das Flussdiagramm 300 beispielsweise mit einem optionalen Schritt 311 fortgesetzt.

In Schritt 311 bewegt sich das Transportfahrzeug 3 autonom und/oder teilautonom zu der erkannten Zielposition und/oder es wird ein autonomes und/oder teilautonomes Bewegen des Transportfahrzeugs 3 zu der erkannten Zielposition 27 bewirkt. Zum Beispiel steuert die Steuervorrichtung 1 das Transportfahrzeug 3 in Schritt 311 derart an, dass das Transportfahrzeug 3 veranlasst wird, sich autonom und/oder teilautonom in Richtung der Zielposition (z.B. basierend auf einer zuvor bestimmten Empfangsrichtung des Bluetooth-Signals und/oder einer zumindest teilweise darauf basierend bestimmten Fahrtrichtung) zu bewegen.

Zusammenfassend ergibt sich durch die vorliegende Erfindung unter anderem der Vorteil, dass der durch das Transportfahrzeug zu fahrende Weg (z.B. zumindest auf dem gemeinsamen Routenabschnitt 24) beispielsweise von einem Führungsfahrzeug (z.B. dem Lastenfahrrad 40) vorgegeben wird und nicht vom Transportfahrzeug (z.B. dem unbemannten Transportfahrzeug 3) berechnet werden muss. Durch das vorausfahrende Führungsfahrzeug kann dabei sichergestellt werden, dass eine grundsätzliche Befahrbarkeit des Wegs gegeben ist. Die Überwachung des autonomen und/oder teilautonomen Transportfahrzeugs kann sich daher (z.B. zumindest auf dem gemeinsamen Routenabschnitt 24) auf die Fahrbewegung des Führungsfahrzeugs, die Passierbarkeit des Weges in Fahrtrichtung für die Kontur und die Abwesenheit von Hindernissen im Bereich zwischen dem Transportfahrzeug und dem vorausfahrenden Führungsfahrzeug beschränken.

Bei dem Transportfahrzeug kann es sich um ein autonomes und/oder teilautonomes Transportfahrzeug handeln, das Transportaufträge erhält (vgl. Schritt 301). Die Transportaufträge können von einer Zentraleinheit (z.B. dem Server 5) kommen oder auch von einem Marktplatz (z.B. einer Netzwerkplattfonn). Zur Erfüllung dieser Transportaufträge kann das Transportfahrzeug Führungsfahrzeugen (z.B. dem Lastenrad 40) und/oder Transportkolonnen (z.B. der Transportkolonne 4) folgen, die Routen (z.B. die geplante Route 23) befahren, die sich zur Erfüllung des Transportauftrages eignen. Die Führungsfahrzeuge und/oder die Transportkolonnen verfügen über eine Kennung (z.B. eine Markierung), die auch einen eindeutigen Schlüssel (z.B. eine Nummer oder eine Ziffernfolge) enthalten kann, durch die sie für das Transportfahrzeug identifizierbar sind. Das Transportfahrzeug kann ebenfalls über eine solche Kennung (z.B. eine Markierung) verfügen, so dass es für andere Fahrzeuge identifizierbar ist.

Im Transportfahrzeug sind die Kennungen geeigneter Führungsfahrzeuge hinterlegt, zum Beispiel werden die Führungsfahrzeuge dem Transportfahrzeug zugewiesen (vgl. Schritt 302). Sobald beispielsweise ein geeignetes Führungsfahrzeug verfügbar ist und das Transportfahrzeug einen Transportauftrag hat, kann es sich dem Führungsfahrzeug anschießen. Das Führungsfahrzeug verfügt beispielsweise über eine Kommunikationsvorrichtung (z.B. Bluetooth-Beacon 41), mit der es sich eindeutig gegenüber einem Transportfahrzeug identifizieren kann. Sobald sich das Führungsfahrzeug dem Erfassungsbereich des Transportfahrzeugs nähert, kann sich das Transportfahrzeug dem Führungsfahrzeug anschließen (d.h. folgen). Optional werden bereits dem Führungsfahrzeug folgende Fahrzeuge erkannt, so dass eine Transportkolonne (z.B. ein Zug) gebildet werden kann.

Die Zuweisung des Transportfahrzeugs zu einem Führungsfahrzeug (z.B. zu dem Lastenfahrrad 40) und/oder zu einer Transportkolonne (z.B. der Transportkolonne 4) kann optional auf verschiedene Arten und sehr flexibel erfolgen (vgl. Schritt 302).

Bei einer Steuerung durch eine Zentraleinheit (z.B. den Server 5) kann die Routenplanung beispielsweise zentral erfolgen. In der Zentraleinheit sind beispielsweise die Routen und Fahrpläne aller bei ihr angemeldeten Führungsfahrzeuge (z.B. des Lastenfahrrads 40) und/oder Transportkolonnen (z.B. der Transportkolonne 4) und/oder entsprechende Informationen hinterlegt (z.B. in Form einer Transportkolonnendatenbank). Dazu kommunizieren die Führungsfahrzeuge mit der Zentraleinheit (z.B. kann das Lastenfahrrad 40 über die Kommunikationsverbindung 21 mit dem Server 5 kommunizieren). Auf Basis der bekannten Routen und Fahrpläne erfolgt die Zuweisung des Transportfahrzeugs zu Führungsfahrzeugen. Dazu findet eine Kommunikation zwischen Zentraleinheit und Transportfahrzeug statt (z.B. kann das Transportfahrzeug 3 über die Kommunikationsverbindung 20 mit dem Server 5 kommunizieren), zum Beispiel indem dem Transportfahrzeug die Kennung des geeigneten Führungsfahrzeugs und/oder der geeigneten Transportkolonne mitgeteilt wird. Sobald sich das Transportfahrzeug dem zugewiesenen Führungsfahrzeug und/oder der zugewiesenen Transportkolonne anschließt, kann eine Bestätigung an die Zentraleinheit erfolgen.

Alternativ oder zusätzlich können für eine eigenständige Zuweisung im Transportfahrzeug alle möglichen Routen und Fahrpläne von Führungsfahrzeugen (z.B. des Lastenfahrrads 40) und/oder Transportkolonnen (z.B. der Transportkolonne 4) und/oder entsprechende Informationen hinterlegt (z.B. in Form einer Transportkolonnendatenbank) werden. Das Transportfahrzeug kann beispielsweise anhand einer internen Routenplanung über einen Anschluss an ein Führungsfahrzeug und/oder eine Transportkolonne entscheiden, sofern das Fahrtziel des Führungsfahrzeugs und/oder der Transportkolonne zur möglichen Transportroute des Transportfahrzeugs passt. Ferner kann auch durch das Führungsfahrzeug (z.B. das Lastenfahrrad 40 und/oder der Funksender 41 des Lastenfahrrads 40) eine automatische Signalisierung der geplanten Route bei Vorbeifahrt an einem Transportfahrzeug erfolgen. Das Transportfahrzeug entscheidet dann eigenständig über einen Anschluss (und eine Trennung) von diesem Führungsfahrzeug. Im Falle einer Kolonnenbildung kann eine direkte Kommunikation zwischen Transportfahrzeug und Führungsfahrzeug erfolgen und/oder mit einem optionalen zentralen entfernten Server.

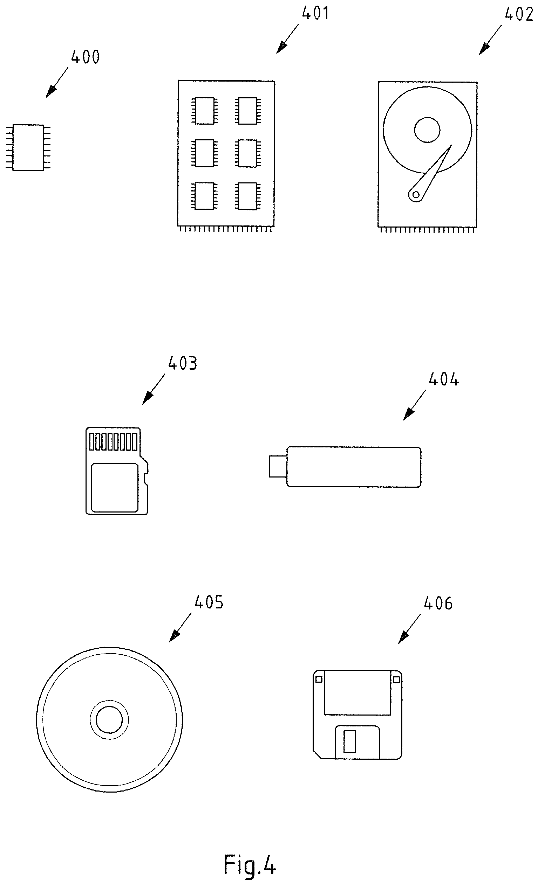

Fig. 4 zeigt schließlich beispielhafte Ausführungsformen von Speichermedien, auf denen ein Ausführungsbeispiel eines offenbarten Computerprogramms gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessors 10 der Fig. 1) sein, beispielsweise ein (nicht-flüchtiger oder flüchtiger) Programmspeicher des Prozessors oder ein Teil davon (z.B. Speicher 11 in Fig. 1). Ausführungsbeispiele eines Speichermediums sind ein Flash-Speicher 400, eine SSD-Festplatte 401, eine magnetische Festplatte 402, eine Speicherkarte 403, ein Memory Stick 404 (z.B. ein USB-Stick), eine CD-ROM oder DVD 405 oder eine Diskette 406.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren ausgeführt durch ein autonomes und/oder teilautonomes Transportfahrzeug (3) und eine Steuervorrichtung (1) für das autonome und/oder teilautonome Transportfahrzeug, wobei die Steuervorrichtung (1) Teil des autonomen und/oder teilautonomen Transportfahrzeugs ist, das Verfahren umfassend:
- Erhalten (301) von Transportinformationen für einen Transportauftrag, wobei die Transportinformationen zumindest eine mit dem Transportauftrag assoziierte Zielposition (27) repräsentieren;
- Erhalten (302) von Transportkolonneninformationen, wobei die Transportkolonneninformationen zumindest eine Kennung einer Transportkolonne (4) repräsentieren, und wobei eine geplante Route (23) der Transportkolonne (4) und eine Transportroute (22) zwischen der aktuellen Position des Transportfahrzeugs und der mit dem Transportauftrag assoziierten Zielposition (27) einen gemeinsamen Routenabschnitt (24) umfassen;
- Erfassen (303) und/oder Bewirken (303) des Erfassens eines ersten Umgebungsparameters;
- Erkennen (304) der Transportkolonne (4) zumindest teilweise basierend auf dem erfassten ersten Umgebungsparameter und der erhaltenen Transportkolonneninformationen, wobei die Transportkolonne (4) zumindest teilweise basierend auf dem erfassten ersten Umgebungsparameter erkannt wird, wenn der erfasste erste Umgebungsparameter eine Repräsentation der Kennung der Transportkolonne (4) enthält; und
- wenn die Transportkolonne (4) erkannt wird, Folgen (306) der Transportkolonne (4) durch das Transportfahrzeug (3).

2. Verfahren nach Anspruch 1, das Verfahren ferner umfassend:
- Erfassen und/oder Bewirken des Erfassens einer Position des Transportfahrzeugs (3).

3. Verfahren nach einem der Ansprüche 1 und 2, das Verfahren ferner umfassend:
- wenn sich die Transportkolonne am Ende (26) und/oder in der Nähe des Endes des gemeinsamen Routenabschnitts (24) befindet, Verlassen (307) der Transportkolonne (4) durch das Transportfahrzeug (3) und/oder Bewirken (307), dass das Transportfahrzeug (3) die Transportkolonne (4) verlässt; und
- autonomes und/oder teilautonomes Bewegen und/oder Bewirken des autonomen und/oder teilautonomen Bewegens (311) des Transportfahrzeugs (3) zu der mit dem Transportauftrag assoziierten Zielposition (27).

4. Verfahren nach Anspruch 3, wobei die geplante Route der Transportkolonne (23) und die Transportroute (22) an dem Beginn (25) des gemeinsamen Routenabschnitts (24) aufeinandertreffen und sich an dem Ende (26) des gemeinsamen Routenabschnitts (24) trennen.

5. Verfahren nach einem der Ansprüche 3 und 4, das Verfahren ferner umfassend:
- Erfassen (308) und/oder Bewirken (308) des Erfassens eines zweiten Umgebungsparameters;
- Erkennen (309) der Zielposition (27) zumindest teilweise basierend auf dem erfassten zweiten Umgebungsparameter, wobei sich das Transportfahrzeug (3) autonom und/oder teilautonom zu der erkannten Zielposition (27) bewegt und/oder das autonome und/oder teilautonome Bewegen des Transportfahrzeugs (3) zu der erkannten Zielposition (27) bewirkt wird.

6. Verfahren nach Anspruch 5, wobei die Transportinformationen eine Kennung der Zielposition (27) repräsentieren, und wobei die Zielposition (27) zumindest teilweise basierend auf dem erfassten zweiten Umgebungsparameter erkannt wird, wenn der erfassten zweiten Umgebungsparameter eine Repräsentation der Kennung der Zielposition (27) enthält.

7. Verfahren nach Anspruch 6, wobei die Kennung der Zielposition (27) eine drahtlos erfassbare Kennung, insbesondere eine optische Kennung und/oder eine Funksignalkennung, ist.

8. Verfahren nach einem der Ansprüche 1 bis 7, wobei das Erkennen (304) der Transportkolonne (4) durch Bestimmen, ob die Repräsentation der Kennung der Transportkolonne (4) in dem erfassten ersten Umgebungsparameter enthalten ist, erfolgt.

9. Verfahren nach einem der Ansprüche 1 bis 8, wobei die Kennung der Transportkolonne (4) eine drahtlos erfassbare Kennung, insbesondere eine optische Kennung und/oder eine Funksignalkennung, ist.

10. Verfahren nach einem der Ansprüche 1 bis 9, das Verfahren ferner umfassend:
- Bestimmen und/oder Bewirken des Bestimmens der Transportroute (22) zwischen der aktuellen Position des Transportfahrzeugs (3) und der mit dem Transportauftrag assoziierten Zielposition (27).

11. Verfahren nach Anspruch 10, wobei das Erhalten der Transportkolonneninformationen umfasst:
- Bestimmen der Transportkolonneninformationen zumindest teilweise basierend auf der Transportroute (22).

12. Verfahren nach einem der Ansprüche 1 bis 10, wobei das Erhalten der Transportkolonneninformationen umfasst:
- Empfangen der Transportkolonneninformationen von einer entfernten Vorrichtung (5).

13. Computerprogramm umfassend Programmanweisungen, die dazu ausgebildet sind, bei Ausführung durch mindestens einen Prozessor eine Vorrichtung zu veranlassen, das Verfahren gemäß einem der Ansprüche 1 bis 12 auszuführen.

14. Steuervorrichtung (1) für ein autonomes und/oder teilautonomes Transportfahrzeug, die Steuervorrichtung umfassend:
- Mittel (10-17) eingerichtet zur Ausführung des Verfahrens nach einem der Ansprüche 1 bis 12 oder umfassend jeweilige Mittel (10-17) zur Ausführung der Schritte des Verfahrens nach einem der Ansprüche 1 bis 12.

15. Autonomes und/oder teilautonomes Transportfahrzeug (3), umfassend:
- eine Steuervorrichtung (1) gemäß Anspruch 14.

16. System, umfassend:
- ein autonomes und/oder teilautonomes Transportfahrzeug (3) gemäß Anspruch 15,
- eine Transportkolonne (4), und
- eine entfernte Vorrichtung (5).

## Claims

1. Method performed by an autonomous and/or semiautonomous transport vehicle (3) and a control apparatus (1) for the autonomous and/or semiautonomous transport vehicle, wherein the control apparatus (1) is part of the the autonomous and/or semiautonomous transport vehicle, the method comprising:
- obtaining (301) pieces of transport information for a transport order, wherein the pieces of transport information represent at least one destination position (27) associated with the transport order;
- obtaining (302) pieces of transport convoy information, wherein the pieces of transport convoy information represent at least one identifier of a transport convoy (4), and wherein a planned route (23) of the transport convoy (4) and a transport route (22) between the current position of the transport vehicle and the destination position (27) associated with the transport order comprise a common route section (24);
- capturing (303) and/or causing (303) the capture of a first surroundings parameter;
- detecting (304) the transport convoy (4) at least in part based on the captured first surroundings parameter and the obtained pieces of transport convoy information, wherein the transport convoy (4) is detected at least in part based on the captured first surroundings parameter, if the captured first surroundings parameter includes a representation of the identifier of the transport convoy (4); and
- if the transport convoy (4) is detected, following (306) the transport convoy (4) by the transport vehicle (3).

2. Method according to Claim 1, the method further comprising:
- capturing and/or causing the capture of a position of the transport vehicle (3).

3. Method according to either of Claims 1 and 2, the method further comprising:
- if the transport convoy is at the end (26) and/or close to the end of the common route section (24), leaving (307) the transport convoy (4) in the transport vehicle (3) and/or causing (307) the transport vehicle (3) to leave the transport convoy (4); and
- autonomously and/or semiautonomously moving and/or causing the autonomous and/or semiautonomous movement (311) of the transport vehicle (3) to the destination position (27) associated with the transport order.

4. Method according to Claim 3, wherein the planned route of the transport convoy (23) and the transport route (22) meet at the beginning (25) of the common route section (24) and separate at the end (26) of the common route section (24).

5. Method according to either of Claims 3 and 4, the method further comprising:
- capturing (308) and/or causing (308) the capture of a second surroundings parameter;
- detecting (309) the destination position (27) at least in part based on the captured second surroundings parameter, wherein the transport vehicle (3) autonomously and/or semiautonomously moves to the detected destination position (27) and/or the autonomous and/or semiautonomous movement of the transport vehicle (3) to the detected destination position (27) is caused.

6. Method according to Claim 5, wherein the pieces of transport information represent an identifier of the destination position (27), and wherein the destination position (27) is detected at least in part based on the captured second surroundings parameter if the captured second surroundings parameter includes a representation of the identifier of the destination position (27).

7. Method according to Claim 6, wherein the identifier of the destination position (27) is a wirelessly capturable identifier, in particular an optical identifier and/or a radio signal identifier.

8. Method according to one of Claims 1 to 7, wherein the detecting (304) of the the transport convoy (4) is performed by determining whether the representation of the identifier of the transport convoy (4) is included in the captured first surroundings parameter.

9. Method according to one of Claims 1 to 8, wherein the identifier of the transport convoy (4) is a wirelessly capturable identifier, in particular an optical identifier and/or a radio signal identifier.

10. Method according to one of Claims 1 to 9, the method further comprising:
- determining and/or causing the determining of the transport route (22) between the current position of the transport vehicle (3) and the destination position (27) associated with the transport order.

11. Method according to Claim 10, wherein the obtaining of the pieces of transport convoy information comprises:
- determining the pieces of transport convoy information at least in part based on the transport route (22).

12. Method according to one of Claims 1 to 10, wherein the obtaining of the pieces of transport convoy information comprises:
- receiving the pieces of transport convoy information from a remote apparatus (5).

13. Computer program comprising program instructions that are configured to, when executed by at least one processor, cause an apparatus to perform the method according to one of Claims 1 to 12.

14. Control apparatus (1) for an autonomous and/or semiautonomous transport vehicle, the control apparatus comprising:
- means (10-17) configured for performing the method according to one of Claims 1 to 12 or comprising respective means (10-17) for performing the steps of the method according to one of Claims 1 to 12.

15. Autonomous and/or semiautonomous transport vehicle (3), comprising:
- a control apparatus (I) according to Claim 14.

16. System, comprising:
- an autonomous and/or semiautonomous transport vehicle (3) according to Claim 15,
- a transport convoy (4), and
- a remote apparatus (5).

## Revendications

1. Procédé exécuté par un véhicule de transport (3) autonome et/ou partiellement autonome et un dispositif de commande (1) pour le véhicule de transport autonome et/ou partiellement autonome, dans lequel le dispositif de commande (1) fait partie du véhicule de transport autonome et/ou partiellement autonome, lequel procédé comprend :
- l'obtention (301) d'informations de transport pour un ordre de transport, dans lequel les informations de transport représentent au moins une position de destination (27) associée à l'ordre de transport ;
- l'obtention (302) d'informations de colonne de transport, dans lequel les informations de colonne de transport représentent au moins un identifiant d'une colonne de transport (4) et dans lequel un itinéraire (23) planifié de la çolonne de transport (4) et un itinéraire de transport (22) entre la position instantanée du véhicule de transport et la position de destination (27) associée à l'ordre de transport comprennent un tronçon d'itinéraire commun (24) ;
- la détection (303) et/ou le déclenchement (303) de la détection d'un premier paramètre d'environnement ;
- l'identification (304) de la colonne de transport (4) au moins en partie sur la base du premier paramètre d'environnement détecté et des informations de colonne de transport obtenues, dans lequel la colonne de transport (4) est identifiée au moins en partie sur la base du premier paramètre d'environnement détecté quand le premier paramètre d'environnement détecté contient une représentation de l'identifiant de la colonne de transport (4) ; et
- quand la colonne de transport (4) est identifiée, le suivi (306) de la colonne de transport (4) par le véhicule de transport (3).

2. Procédé selon la revendication 1, lequel procédé comprend en outre :
- la détection et/ou le déclenchement de la détection d'une position du véhicule de transport (3).

3. Procédé selon l'une quelconque des revendications 1 et 2, lequel procédé comprend en outre :
- quand la colonne de transport se trouve à la fin (26) et/ou à proximité de la fin du tronçon d'itinéraire commun (24), la sortie (307) de la colonne de transport (4) par le véhicule de transport (3) et/ou le déclenchement (307) de la sortie de la colonne de transport (4) par le véhicule de transport (3) ; et
- le déplacement autonome et/ou partiellement autonome et/ou le déclenchement du déplacement (311) autonome et/ou partiellement autonome du véhicule de transport (3) vers la position de destination (27) associée à l'ordre de transport.

4. Procédé selon la revendication 3, dans lequel l'itinéraire planifié de la colonne de transport (23) et l'itinéraire de transport (22) se retrouvent au début (25) du tronçon d'itinéraire commun (24) et se séparent à la fin (26) du tronçon d'itinéraire commun (24).

5. Procédé selon l'une quelconque des revendications 3 et 4, lequel procédé comprend en outre :
- la détection (308) et/ou le déclenchement (308) de la détection d'un deuxième paramètre d'environnement ;
- l'identification (309) de la position de destination (27) au moins en partie sur la base du deuxième paramètre d'environnement détecté, dans lequel le véhicule de transport (3) se déplace de manière autonome et/ou de manière partiellement autonome vers la position de destination (27) identifiée et/ou le déplacement autonome et/ou partiellement autonome du véhicule de transport (3) vers la position de destination (27) identifiée est déclenché.

6. Procédé selon la revendication 5, dans lequel les informations de transport représentent un identifiant de la position de destination (27), et dans lequel la position de destination (27) est identifiée au moins en partie sur la base du deuxième paramètre d'environnement détecté quand le deuxième paramètre d'environnement détecté contient une représentation de l'identifiant de la position de destination (27).

7. Procédé selon la revendication 6, dans lequel l'identifiant de la position de destination (27) est un identifiant pouvant être détecté sans fil, en particulier un identifiant optique et/ou un identifiant optique et/ou un identifiant de signal radio.

8. Procédé selon l'une quelconque des revendications 1 à 7, dans lequel l'identification (304) de la colonne de transport (4) est effectuée par la détermination de savoir si la représentation de l'identifiant de la colonne de transport (4) est contenue dans le premier paramètre d'environnement détecté.

9. Procédé selon l'une quelconque des revendications 1 à 8, dans lequel l'identifiant de la colonne de transport (4) est un identifiant pouvant être détecté sans fil, en particulier un identifiant optique et/ou un identifiant de signal radio.

10. Procédé selon l'une quelconque des revendications 1 à 9, lequel procédé comprend en outre :
- la détermination et/ou le déclenchement de la détermination de l'itinéraire de transport (22) entre la position instantanée du véhicule de transport (3) et la position de destination (27) associée à l'ordre de transport.

11. Procédé selon la revendication 10, dans lequel l'obtention des informations de colonne de transport comprend :
- la détermination des informations de colonne de transport au moins en partie sur la base de l'itinéraire de transport (22).

12. Procédé selon l'une quelconque des revendications 1 à 10, dans lequel l'obtention des informations de colonne de transport comprend :
- la réception des informations de colonne de transport d'un dispositif (5) éloigné.

13. Programme informatique comprenant des instructions de programme, qui sont réalisées pour amener lors de l'exécution par un processeur un dispositif à exécuter le procédé selon l'une quelconque des revendications 1 à 12.

14. Dispositif de commande (1) pour un véhicule de transport autonome et/ou partiellement autonome, lequel dispositif de commande comprend :
- des moyens (10 - 17) mis au point pour exécuter le procédé selon l'une quelconque des revendications 1 à 12 ou comprend des moyens (10 - 17) respectifs pour exécuter les étapes du procédé selon l'une quelconque des revendications 1 à 12.

15. Véhicule de transport (3) autonome et/ou partiellement autonome, comprenant :
- un dispositif de commande (1) selon la revendication 14.

16. Système comprenant :
- un véhicule de transport (3) autonome et/ou partiellement autonome selon la revendication 15,
- une colonne de transport (4), et
- un dispositif (5) éloigné.
